# EUROPÄISCHE PATENTSCHRIFT

(11) **EP 1 263 826 B1**
(45) Veröffentlichungstag und Bekanntmachung des Hinweises auf die Patenterteilung: **24.08.2005**
(21) Anmeldenummer: 01927668.2
(22) Anmeldetag: 14.02.2001
(51) Int. Cl.: C08G 18/08, C08G 18/66, C08G 18/44, C09D 175/04, C04B 41/48

(54) **VERWENDUNG VON WÄSSRIGEN POLYURETHAN-DISPERSIONEN IN FORMULIERUNGEN FÜR RISSÜBERBRÜCKENDE BESCHICHTUNGSSYSTEME**
USE OF AQUEOUS POLYURETHANE DISPERSIONS IN FORMULATIONS FOR CRACK SEALING COATING SYSTEMS
UTILISATION DE DISPERSIONS AQUEUSES DE POLYURETHANNE DANS DES FORMULATIONS POUR SYSTEMES DE REVETEMENT SERVANT A COLMATER DES FISSURES

(30) Priorität: 15.02.2000 DE 10006539
(43) Veröffentlichungstag der Anmeldung: 11.12.2002
(73) Patentinhaber: Conica Technik AG, 8207 Schaffhausen (CH); SKW Bauwerkstoffe Deutschland GmbH, 83308 Trostberg (DE)
(72) Erfinder: HÄBERLE, Hans, 78244 Gottmadingen (DE); TEMME, Werner, 78244 Bietingen (DE); BERGS, Ralph, 78247 Hilzingen (DE); STEIDL, Norbert, D-83361 Kienberg (DE); MAIER, Alois, 84549 Engelsberg (DE)
(74) Vertreter: HOFFMANN EITLE
(86) Internationale Anmeldenummer: PCT/EP2001/001634
(87) Internationale Veröffentlichungsnummer: WO 2001/060883

(56) Entgegenhaltungen:
- EP-A- 0 808 859
- DE-A- 19 833 819
- FR-A- 2 727 686

## Beschreibung

### Technisches Gebiet

Die vorliegende Erfindung betrifft die Verwendung von wässrigen Polyurethan-Dispersionen in Formulierungen für rissüberbrückende Beschichtungssysteme.

### Stand der Technik

Trotz flächendeckender, grenzüberschreitender Bemühungen, Immissionen von umweltbelastenden Schadstoffen durch gesetzliche Vorschriften und Grenzwerte einzudämmen, sind Schäden an Betonbauwerken nicht gänzlich zu vermeiden und auszuschließen. Dies hat verschiedene Gründe. Zum einen sind Luftschadstoffe wie Stickoxide und Schwefeldioxid durch Verkehrs-, Industrie- und Heizungsabgase noch immer eine der Hauptursachen für teilweise gravierende Schäden an Parkhäusern, Brücken und Tunnels. Zum anderen wurden in der Vergangenheit bedauerlicherweise, durch mangelndes Qualitätsbewusstsein und fehlende Sorgfalt, Zerstörungen durch Tausalze an ungenügend geschützten Betonbauwerken geradezu provoziert.

Zur Erhöhung der Dauerhaftigkeit von Betonbauwerken werden seit vielen Jahren erfolgreich Oberflächenschutzsysteme angewendet. Bei einer fehlstellenfreien Applikation werden folgende Effekte erzielt:
- Schutz des Betons vor eindringendem Wasser und darin gelösten Schadstoffen (Tausalze)
   - Verhinderung der Bewehrungskorrosion
   - Verhinderung von Frost-Tau-Schäden
   - Verhinderung von Osmose
- Schutz des Betons vor gasförmigen Schadstoffen (Carbonatisierung)
- Vermeidung von Rissbildung im Beton (v.a. durch Korrosion der Bewehrung)
- Schutz des Betons vor Chemikalieneinwirkung

Ein Überblick über die wichtigsten Typen an Oberflächenschutzsystemen für Betonschutz und -sanierung wird in M. Bock in: Polyurethane für Lacke und Beschichtungen, U. Zorll (Hrsg.), Vincentz Verlag, Hannover 1999 und W. Michel, beton 5 (1998) 295-296 gegeben:

### Parkdeckbeschichtungen

Parkdecks erhielten in der Vergangenheit zum Schutz oftmals nur eine Versiegelung. Maßgebend hierfür sollte aber die DIN 1045 sein. Dort ist in Absatz 17.6.1.5 gefordert, dass Bauteile aus Stahlbeton, bei denen Risse über den gesamten Querschnitt zu erwarten sind, immer dann einen besonderen Schutz bekommen müssen, wenn auf diese Teile stark chloridhaltiges Wasser (z.B. durch Tausalzanwendung) einwirkt. Gemeint sind im wesentlichen statisch unbestimmt gelagerte, horizontale Flächentragwerke, und dazu gehören auch Parkdecks. Risse sind hier aufgrund der Zwangsbeanspruchungen praktisch unvermeidbar.

Als besondere Schutzmassnahme wird eine rissüberbrückende Beschichtung des Stahlbetons empfohlen.

Vor allem geht es dabei um die Voraussetzungen für eine dauerhafte Rissüberbrückung vorhandener und neu entstandener Trennrisse unter temperatur- und lastabhängigen Bewegungen, und zwar bei einer Mindestrissüberbrückung von 0,3 mm im Temperaturbereich von - 20 bis + 70 °C.
Parkdeckbeschichtungen, die den Anforderungen der Richtlinien entsprechen, werden in einer Schichtdicke von 3 bis 4,5 mm appliziert.
Zulässig sind hierfür sowohl Ein- als auch Zweischichtsysteme. Bei Zweischichtsystemen kommen den beiden Schichten unterschiedliche Funktionen zu: So muss mit der unteren Schicht die Rissüberbrückung insbesondere bei niedrigen Temperaturen gesichert sein. Die Deckschicht wirkt vor allem dem Verschleiß entgegen, sie muss mechanischen, chemischen und witterungsbedingten Belastungen standhalten.
Einschichtsysteme haben alle diese Anforderungen gleichzeitig zu erfüllen. Um beim jeweiligen Material Rissüberbrückung bei - 20 °C sowie Zug-, Weiterreiß- und Abriebfestigkeit gewährleisten zu können, bedarf es zu seiner Formulierung einer sorgfältigen Bindemittelauswahl sowie eines "fine tuning" im Herstellungsprozess.

Beide Systemtypen - ein- wie zweischichtig - werden heutzutage vorwiegend auf Polyurethanbasis konzipiert. Ökonomisch vorteilhafter dürfte allerdings zumeist die Einschichtvariante sein.

Die Anforderungen an rissüberbrückende, befahrbare Beschichtungen für Parkhäuser und Tiefgaragen werden in Deutschland heute in zwei Regelwerken definiert: Erstens die OS-F-Systeme nach den "Zusätzlichen technischen Vertragsbedingungen für Schutz und Instandhaltung von Betonbauteilen" (kurz ZTV-SIB genannt) und zweitens die OS 11-Systeme nach der "Richtlinie für Schutz und Instandsetzung von Betonbauteilen" (kurz Rili-SIB genannt). Der Geltungsbereich der ZTV-SIB ist im Prinzip auf Bauwerke begrenzt, die im Verantwortungsbereich des Bundesministeriums für Verkehr liegen. In der Praxis werden Zulassungen nach diesem Regelwerk aber auch von privaten oder kommunalen Eigentümern gefordert. Das Regelwerk Rili-SIB hat einen allgemeineren Geltungsbereich. Es wurde vom Deutschen Ausschuss für Stahlbeton (DafStb) für Betonbauwerke des Ingenieurbaus erarbeitet. Die technischen Anforderungen an rissüberbrückende, befahrbare Beschichtungen, ob OS-F oder OS-11, sind in beiden Regelwerken nahezu identisch. Sowohl die ZTV-SIB als auch die Rili-SIB schreiben Regelaufbauten vor. Der aus 1990 stammende Teil 2 der Rili-SIB enthält drei Regelaufbauten für OS-11-Beschichtungen. Die heute gängigen Ausführungsvarianten sind die Aufbauten A und B nach ZTV-SIB. Sie werden in den Anfang 1997 erschienenen "Technischen Liefer- und Technischen Prüfbedingungen für Oberflächenschutzsysteme" (TL/TP-OS 1996) beschrieben. Der Aufbau A ist vergleichbar mit dem Aufbau 1 der Rili-SIB. Es handelt sich um einen sogenannten zweischichtigen Aufbau. Die Hauptfunktionen - Rissüberbrückung und Verschleißfestigkeit - werden von zwei getrennten Schichten erfüllt. Der Aufbau B ist ein sogenannter einschichtiger Aufbau, bei dem die beiden Hauptfunktionen von einer Schicht erfüllt werden müssen. Er ist der modernste Beschichtungsaufbau und erst seit der Neuausgabe der TL/TP-OS 1996 in ein Regelwerk integriert. In der Rili-SIB gibt es dazu keinen vergleichbaren Regelaufbau. Deckversiegelungen werden nur nach ZTV-SIB für einschichtige Aufbauten gefordert. In der Praxis sind sie jedoch in allen Fällen unverzichtbar, da die abgestreuten Schichten ohne Deckversiegelung extrem stark verschmutzen, fast nicht zu reinigen sind und darüber hinaus sehr hohe Verschleißerscheinungen aufweisen. Wird ein System mit Deckversiegelung verarbeitet, so muss auch sie geprüft werden, da sie einen maßgeblichen Einfluss auf Eigenschaften wie Griffigkeit, Verschleiß und Rissüberbrückung hat.

Zwecks einer Zusammenführung dieser beiden Normen wurde ein Entwurf eines neuen Regelwerkes erarbeitet. In diesem wird mit OS 13 erstmals ein neues Oberflächenschutzsystem mit statischer Rissüberbrückungsfähigkeit für begeh- und befahrbare, mechanisch belastete Flächen beschrieben. Oberflächenschutzsysteme nach OS 11 (OS-F) müssen dagegen eine dynamische (temperatur- und lastabhängige) Rissüberbrückung der Klasse II_{T+L} aufweisen(s. Tabelle 1).

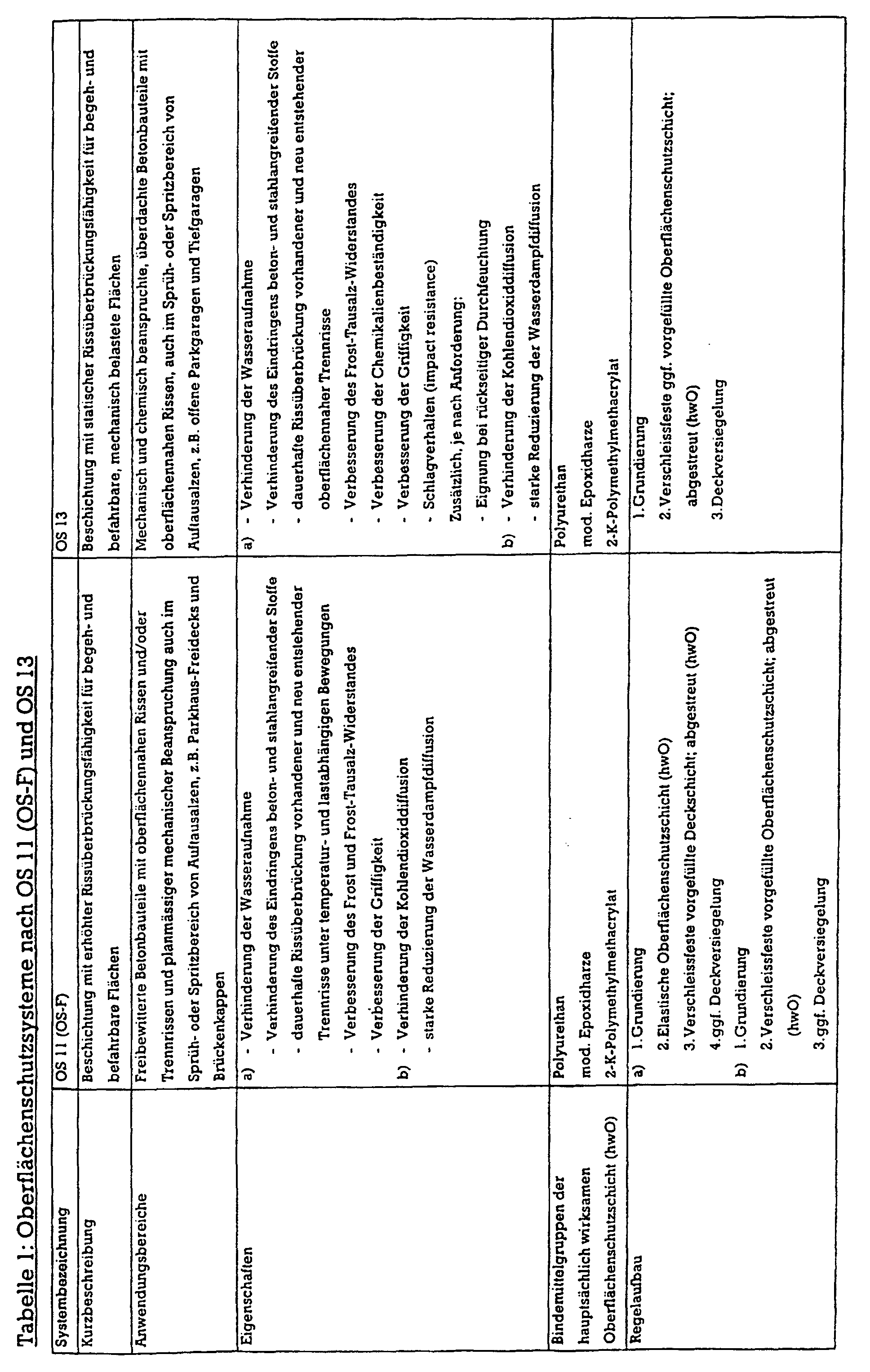

### Balkonabdichtungen

Balkone, Terrassen, Loggien etc. befinden sich im Gebäudeaußenbereich und sind daher starken Witterungseinflüssen und mechanischem Verschleiß ausgesetzt. Der tragende Betonuntergrund bedarf deshalb eines hochwertigen Schutzes, insbesondere gegen eindringende Feuchtigkeit. Ist dies nicht gegeben, kann die Feuchtigkeit auch in angrenzende Geschossdecken eindringen, die Armierung der Betonplatte sowie einbetonierte Balkongeländer-Halterungen können korrodieren oder es kommt zu Abplatzungen der Betonschicht durch Frost-Tau-Zyklen. Die Folge ist eine verminderte Tragfähigkeit der Balkonplatte, schließlich kann der Balkon nicht mehr genutzt werden.

Der PUR-Flüssigkunststoff kann hier die notwendige Schutzfunktion erfüllen, gleichzeitig dient er der dekorativen Gestaltung der Balkonoberfläche

### Normen und Regelwerke

Für die Abdichtung von Balkonen und Loggien mit Flüssigkunststoffen liegen keine speziellen Regelwerke vor.

Zu beachten sind folgende allgemeine Normen:
- Richtlinie für Schutz und Instandsetzung von Betonbauteilen, herausgegeben vom Deutschen Ausschuss für Stahlbeton, Berlin,
- Zusätzliche Technische Vertragsbedingungen und Richtlinien für Schutz und Instandsetzung von Betonbauteilen 1990 (ZTV-SIB), herausgegeben vom Bundesminister für Verkehr.

Flüssigkunststoffe zur Balkonabdichtung müssen eine hohe Licht- und Wetterbeständigkeit zeigen sowie auch bei Temperaturwechseln elastisch bleiben. Mit PUR-Materialien lassen sich diese Fcrderungen erfüllen.

So sind Beschichtungen auf Basis von IPDI-Polycarbonat-Prepolymeren und HDI-Polyisocyanaten in ausreichendem Maße lichtecht und zudem als transparente Abdichtung einsetzbar. Beschichtungen auf Basis von TDI-Prepolymeren werden als hochflexible, zweikomponentige Membranen verwendet, und zwar entweder in Kombinationen mit Deckschichten auf Basis von IPDI- oder HDI-Prepolymeren oder als Abdichtung unter keramischen Fliesen.

Für die Reaktionspartner gilt: Die Verwendung von Polycarbonat-Polyolen in den PUR-Prepolymeren führt zu wetterbeständigen, elastischen Beschichtungen. Prepolymere, die auf Polyether-/Polyester-Polyolen basieren, sind nicht wetterbeständig und daher nicht in der abschließenden, dem Wetter ausgesetzten Schicht einsetzbar. Neben dem Bindemittel enthalten die Formulierungen meist mineralische Füllstoffe, Pigmente und viele andere Zusatzstoffe.

Bewährt haben sich bei der Balkonabdichtung sowohl lösemittelhaltige 1K-PUR-Beschichtungen, die mit Luftfeuchtigkeit aushärten, als auch lösemittelfreie 2K-Systeme. Die wichtigsten PUR-Rohstoffe zur Balkonabdichtung sind in Tabelle 2 zusammengefasst.

**Tabelle 2:**

| PUR-Rohstoffe zur Balkonabdichtung | |
|---|---|
| Bindemittelbasis | Rohstoffkombinationen |
| einkomponentig aliphatisch | IPDI-Polycarbonat-Prepolymere IPDI-Polyisocyanate, Bisoxazolidine |
| zweikomponentig aliphatisch | HDI-Polyisocyanate, IPDI/HDI-Polyisocyanate, Polycarbonat-/Polyether-/Polyester-Polyole |
| zweikomponentig aromatisch | TDI-Polyether-Prepolymere, Amine |

### Aufbau von Balkonbeschichtungen

### Begehbare PUR-Balkonbeschichtungen

Je nach zu erwartender Rissbildung in der Betonplatte kann zwischen zwei Aufbauten unterschieden werden:

Für Betonplatten mit schmaleren Rissen (bis ca. 0,5 mm):
a) Grundierung,
b) Elastische PUR-Beschichtung auf Basis aliphatischer Polyisocyanate.

Für Betonplatten mit breiteren Rissen (1 bis 2 mm):
a) Grundierung,
b) Zwischenschicht, hochflexible PUR-Beschichtung auf Basis aromatischer Polyisocyanate,
c) Deckschicht, elastische PUR-Beschichtung auf Basis aliphatischer Polyisocyanate.

Außerdem besteht die Möglichkeit, eine elastische Abdichtung in Membranform auf einer Betonplatte unter Fliesen zu installieren. Dies führt zu folgendem Aufbauschema:
a) Grundierung,
b) Hochflexible PUR-Beschichtung auf Basis aromatischer Polyisocyanate,
c) Hochflexible PUR-Beschichtung auf Basis aromatischer Polyisocyanate mit Sandeinstreuung,
d) Kunststoffmodifizierter Mörtel (PCC-Mörtel),
e) Fliesen.

### Verarbeitungstechniken

Vor der Sanierung ist zu prüfen, ob die Balkonbodenplatte noch tragfähig ist. Alte Beläge müssen vor Aufbringen der PUR-Abdichtung entweder entfernt oder gut aufgerauht werden.

Die Betonoberfläche sollte vorher kugelgestrahlt werden, sehr glatte Flächen sind anderweitig aufzurauhen. Fett- oder ölhaltige Verunreinigungen müssen entfernt werden. Wichtig ist, dass die Restfeuchtigkeit des Untergrundes nicht über vier Prozent hinausgeht.

Die Grundierung dient zur Untergrundverfestigung und zur Staubbindung. Gewährleistet ist damit eine gute Haftung der folgenden Schichten zum Untergrund. Als Grundierung verwendet man meist lösemittelfreie Epoxidharzsysteme, in die zur Haftverbesserung Sand eingestreut wird. Auch ein- oder zweikomponentige Polyurethane oder dispersionsbasierende Produkte werden für Grundierungen eingesetzt.

Als Beschichtungsmaterialien kommen sowohl lösemittelhaltige 1K- als auch lösemittelarme 2K-PUR-Formulierungen in Betracht. Der Beschichtungsaufbau hängt, wie oben beschrieben, von der Problemstellung ab.

Zur dekorativen Gestaltung der Abdichtung, aber auch, um deren Rutschfestigkeit zu gewährleisten, können Kunststoff-Chips in die noch nicht ausgehärtete Beschichtung eingestreut werden. Anschließend wird diese Fläche mit einer transparenten, lichtechten Deckschicht aus PUR-Flüssigkunststoff versiegelt. Eine weitere Gestaltungsmöglichkeit eröffnet sich mit dem Einarbeiten von Colorit-Quarz in die transparente PUR-Beschichtung.

Generell lassen sich die PUR-Flüssigkunststoffe durch Rollen, Streichen oder mittels Zahnrakel aufbringen.

### Flachdachabdichtungen

Das Abdichten von Flachdächern mit Flüssigfolien spielt in der Praxis noch keine dominante Rolle. Bisher wird die überwiegende Mehrzahl der Flachdächer noch mit Bahnenmaterial abgedichtet, etwa mit (polymermodifiziertem) Bitumen, Kautschukpolymeren oder PVC.

Trotzdem erscheint die Abdichtung mit einer Flüssigfolie gerade bei Dächern mit vielen Durchdringungen (Lüftern, Dachkuppeln, Abläufen etc.) als eine sichere und wirtschaftlich interessante Lösung. Typische Bindemittel für Flüssigfolien sind neben Polyurethanen auch ungesättigte Polyester und Acrylate.

PUR-Flüssigkunststoffe für Dachabdichtungen sind Beschichtungsmaterialien, die flüssig appliziert werden und zu einer dauerelastischen, witterungsbeständigen Membran aushärten. Sie finden vorwiegend Anwendung beim Sanieren undichter Flachdächer, aber auch beim Neubau. Wichtige Eigenschaften einer solchen Beschichtung sind zum eine lange Lebensdauer, zum anderen ein geringer Diffusionswiderstand für Wasserdampf, so dass durchfeuchtete Dächer nach Aufbringen der Beschichtung noch austrocknen können.

Im Gegensatz zur Verwendung von Abdichtungsbahnen führt der Einsatz von PUR-Flüssigkunststoffen zu einer nahtlosen Abdichtung.

### Normen und Regelwerke

Für die Flachdachsanierung mit Flüssigkunststoffen sind folgende Regelwerke relevant:
- Richtlinien für die Planung und Ausführung von Dächern mit Abdichtungen (Flachdachrichtlinien), herausgegeben vom Zentralverband des Deutschen Dachdeckerhandwerks,
- DIN 4102/Teil 7, "Beständigkeit gegen strahlende Wärme und Flugfeuer",
- UEATC-Agreement (zukünftig EOTA = European Organisation for Technical Approvals).

Bei einkomponentigen Formulierungen wird ein blasenfreies Aushärten der Beschichtung in der geforderten Schichtdicke von ca. 2 mm durch Bisoxazolidin gesichert, welches mit der Luftfeuchtigkeit reagiert und dabei Amino- und Hydroxyl-Gruppen freisetzt, die ihrerseits mit dem Polyurethan-Prepolymeren abreagieren. Dadurch wird zwischen Polyurethan-Prepolymerem und Luftfeuchtigkeit eine direkte Reaktion unterdrückt, die zur Kohlendioxid- und damit Blasenbildung führen würde. Dachabdichtungen auf Basis aromatischer Polyisocyanate müssen durch Ruß oder Aluminiumpaste (Aluminiumpulver in Weichmacher) stabilisiert werden. Letztere bewirkt eine Reflexion der Sonneneinstrahlung und trägt auf diese Weise bei zur Wetterstabilisierung der Polyurethanbeschichtung bei.

Verwendbar für diese Zwecke sind auch zweikomponentige hochreaktive Formulierungen. Sie sind schnelltrocknend und lassen sich daher nur mit speziellen Maschinen auftragen. Bestehen können diese Produkte z.B. aus der Mischung eines TDI-Prepolymers und eines MDI-Polyisocyanates, das mit einer Polyol-Amin-Kombination gehärtet wird.

Die Lichtstabilisierung wird hier durch Zugabe von Russ oder Aluminiumpulver oder durch Überversiegelung mit einem Polyurethan auf Basis aliphatischer Polyisocyanate erreicht. Tabelle 3 gibt einen Überblick über Typen und Eigenschaften von PUR-Flüssigfolien.

**Tabelle 3:**

| Typen und Eigenschaften von PUR-Flüssigfolien für die Flachdachabdichtung | | | |
|---|---|---|---|
| Bindemittelbasis | Verarbeitungsart | Rohstoffe | zusätzliche Hinweise |
| einkomponentig aromatisch | Handverarbeitung | TDI-Polyether-Prepolymere und Oxazolidine | Systeme müssen mit Aluminiumpigmenten oder mit Ruß wetterstabil ausgerüstet werden |
| einkomponentig aliphatisch | Handverarbeitung | IPDI-Polycarbonat-Prepolymere und Oxazolidine | Systeme können in allen Farbtönen eingestellt werden |
| zweikomponentig aromatisch | Spritzverarbeitung mittels 2K-Anlage | TDI- und MDI-Prepolymere, Polyether, Amine | Systeme müssen mit Aluminiumpigmenten oder mit Ruß oder durch Überversiegelung wetterstabil ausgerüstet werden |

In ihrer Farbe beliebig einstellbare ein- und zweikomponentig handverarbeitbare Dachbeschichtungen lassen sich auf Basis von Prepolymeren aus aliphatischen Polyisocyanaten und Polycarbonat-Polyolen formulieren.

### Aufbau der Dachabdichtung

Beim Sanieren mit PUR-Flüssigfolien brauchen undicht gewordene Abdichtungsmaterialien, meist Bitumenbahnen, zuvor nicht entfernt zu werden. Nach Aufbringungsart der PUR-Flüssigfolie gibt es zwei Alternativen:

Handverarbeitbare IK-Systeme, bestehend aus:
a) Primer (Voranstrich zur Verfestigung des Untergrundes und zur Staubbindung),
b) Grundschicht (ca. 1,5 kg·m⁻² PUR-Flüssigkunststoff, aufgetragen mittels Rollen),
c) Polyestervlies (ca. 100 g·m⁻² wird in das flüssige PUR-Beschichtungsmaterial eingearbeitet, ermöglicht mechanische Festigung und Einhalten der angestrebten Schichtdicke),
d) Deckschicht (ca. 1 kg·m⁻² PUR-Flüssigkunststoff wird nach Trocknen der Grundschicht aufgebracht und deckt das Polyestervlies ab).

Maschinenverarbeitbare 2K-Spritzsysteme, bestehend aus:
a) Primer,
b) 2K-PUR-Spritzbeschichtung (Mindestschichtdicke 2 mm).

Vor Aufbringen des PUR-Flüssigkunststoffes müssen folgende Bedingungen erfüllt sein:
- der Untergrund muß sauber und tragfähig sein,
- die Restfeuchtigkeit des Untergrundes sowie der darunter liegenden Dämmschichten darf höchstens vier Prozent betragen.

Die Verarbeitung von zweikomponentigen, hochreaktiven Abdichtungssystemen geschieht in 2K-Anlagen, die mit Zahnrad- oder Kolbenpumpen ausgestattet sind.

Tabelle 4 fasst die für PUR-Flüssigkunststoffe gebräuchlichen Primer zusammen. Primer sowie 1K-PUR-Flüssigkunststoffe werden durch Streichen, Rollen oder Verspritzen mittels 1K-Airless-Anlagen aufgebracht.

**Tabelle 4:**

| Gebräuchliche Primer für PUR-Flüssigkunststoffe auf verschiedenen Untergründen | |
|---|---|
| Untergrund | Primer |
| Beton | MDI-Polyether-Prepolymere oder abgesandete Epoxidharzprimer |
| Asbest | MDI-Polyether-Prepolymere oder abgesandete Epoxidharzprimer |
| Dachbahnen | MDI |

### Fußbodenbeschichtungen

Fußböden haben für die Funktionalität von Industriebetrieben eine besondere Bedeutung. Von ihrer Qualität hängen einwandfreier Ablauf der Produktion ebenso wie die sachgemäße Lagerung der Produkte ab.

Die Anforderungen an den Industrieboden sind dementsprechend hoch und vielfältig. Je nach Nutzungsart und Belastung werden unterschiedliche Eigenschaften gefordert, etwa:
- mechanische und dynamische Belastbarkeit^{a} (Druck-, Schlag- und Stossfestigkeit, Abriebfestigkeit, Rissfreiheit),
- Chemikalienbeständigkeit^{a},
- elektrischer Widerstand^{b},
- Temperaturbeständigkeit^{a} (Dauer-, Kurzzeitbeständigkeit),
- Farbton- und Wetterbeständigkeit^{a},
- Isolation^{a} (akustisch, thermisch),
- Ebenheit (DIN 18 202, Teil 5^{c}),
- Rutschfestigkeit^{c},
- geringer Pflegeaufwand, Reinigungsfähigkeit^{a,c}
- Reparaturfreundlichkeit^{a},
- Lebensdauer, Kosten-Nutzen-Faktor.

^{a)} vorwiegend von der Wahl der Rohstoffe abhängig;
^{b)} vorwiegend von der Formulierung abhängig
^{c)} vorwiegend von der Applikation abhängig

Viele der gewünschten Eigenschaften werden z.B. nach DIN 28 052 definiert und ergeben in ihrer Gesamtheit das Nutzungsprofil.

Fußböden haben primär die Aufgabe, statische und dynamische Lasten aufzunehmen und zu verteilen. Ein Fußboden kann - unabhängig von seinem tatsächlichen Aufbau - als aus zwei Schichten bestehend definiert werden, nämlich
1. einer Tragschicht, die z.B. aus einer monolithischen Betonplatte oder aus Betonplatte und Estrich besteht bzw. bestehen kann und
2. der mit der Tragschicht fest verbundenen Nutzschicht. Sie muss den chemischen Belastungen standhalten und weitere nutzerspezifische Anforderungen erfüllen, z.B. Rutschfestigkeit, Reinigungsfähigkeit oder Optik, wie oben bereits näher ausgeführt.

Fußbodenbeschichtungen sind derartige Nutzschichten.

Um einen voll funktionsfähigen Verbund zu erhalten, müssen die Eigenschaften der einzelnen Schichten aufeinander abgestimmt sein. Nutzschichten werden oftmals auf Basis von Kunstharzen, insbesondere Reaktivsystemen, wie z.B. Polymethylmethacrylat (PMMA), Epoxidharz (EP) oder Polyurethan (PUR), hergestellt. Die Fußbodenbeschichtung lässt sich ausführen als Versiegelung, als Dünnbeschichtung bis 0,3 mm bzw. Beschichtung bis 3 mm Schichtdicke. Weitere Applikationsmöglichkeiten sind Kunstharzestrich oder dekorativer Kunstharzestrich mit Schichtdicken von mehr als 3 bis ca. 10 mm (Zierkiesbeschichtung). Im letzteren Fall hat die Nutzschicht zusätzlich auch Tragfähigkeit. Versiegelungen, Dünnbeschichtungen und Beschichtungen werden lösemittelfrei bis -arm und Kunstharzestriche grundsätzlich lösemittelfrei formuliert.

PUR-Beschichtungen können von hochelastisch (für Membranen, Sportanlagen) bis hart und hochchemikalienbeständig (für Chemieanlagen) eingestellt werden.

Typische Anwendungen solcher Beschichtungen sind:
- 1K- und 2K-Grundierungen und Versiegelungen,
- Sporthallenbeläge,
- Membranbeschichtungen,
- Industriebodenbeschichtungen von zähelastisch bis hart entsprechend den OS- oder WHG-Vorschriften,
- 1K- und 2K-Kunstharzmörtel und Zierkiesbeläge.

Entscheidend für den Einsatzerfolg sind die folgenden PUR-typischen Eigenschaften:
- Durchhärtung auch bei tiefen Temperaturen,
- gute Haftung,
- vorherbestimmbare Härte und daraus resultierend:
   - sehr gute Chemikalienbeständigkeit bei harten Beschichtungen,
   - Rissüberbrückung mit elastischen und zähelastischen Einstellungen,
   - fugenlose Verlegung,
   - beeinflussbarer Wasserdampfdiffusionswiderstand (für Applikation auf Anhydrit- und Magnesitestrichen),
   - gute Hydrolysebeständigkeit und geringe Wasseraufnahme,
   - sehr gute Wetter- und Farbtonstabilität bei Beschichtungen auf Basis ausgesuchter aliphatischer Produkte.

Die breite Nutzung seit mehr als drei Jahrzehnten, mit einer Vielzahl von Referenzobjekten, beweist die hervorragende Qualität und lange Lebensdauer von PUR-Bodenbeschichtungen.

Die wichtigsten Grundprodukte für die Herstellung von PUR-Fußbodenbeschichtungen sind Isomerengemische und Prepolymere des Diphenylmethandiisocyanats (MDI). Außerdem werden Oligomere bzw. Addukte des Hexamethylendiisocyanats (HDI) und Isophorondiisocyanats (IPDI) sowie Prepolymere des Toluylendiisocyanats (TDI) und des Isophorondiisocyanats (IPDI) genutzt.

Als Reaktionspartner stehen primär Polyhydroxy-Verbindungen, aber auch aromatische und sterisch gehinderte aliphatische Amine sowie latente Härter zur Verfügung. Letztere werden durch Einwirkung von Feuchtigkeit in reaktionsfähige Produkte überführt. Weiterhin nutzt man bei den klassischen Einkomponenten-Systemen (1K-PUR) die Reaktion der Polyurethan-Prepolymere mit Feuchtigkeit zur Polymerbildung. Mit dieser Reaktion sind jedoch nur dünnschichtige Filme herstellbar, da ansonsten Schaumbildung eintritt.

Die Anwendung dieser Chemie gelingt auch aus wässriger Phase bei Verwendung spezieller Polyol-Dispersionen. Dabei ist es möglich, einen breiten Schichtdickenbereich abzudecken. Für hohe Schichtdicken ist allerdings die zusätzliche Mitverwendung von Zement und/oder gelöschtem Kalk notwendig (sog. 3K-Systeme), um das unter der Einwirkung von Wasser entstehende Kohlendioxid abzufangen. Derartige Beschichtungen zeichnen sich durch extrem hohe Chemikalienbeständigkeit aus (UCrete®, Desmolith®).

Als Polyhydroxy-Verbindungen stehen nieder- und höhermolekulare Produkte - geradkettig und verzweigt - mit unterschiedlicher chemischer Struktur zur Verfügung. Dabei gewährleisten beispielsweise Polyester-Polyole eine gute Lösemittelbeständigkeit, Polyether-Polyole weitgehende Säure- und Alkalibeständigkeit, Acryl- und Methacrylsäure-Derivate eine hohe Wetterbeständigkeit.

Beim Verarbeiten dieser Materialien auf der Baustelle müssen störende Einflüsse vermieden werden. Zu nennen ist hier speziell die Gefahr der Schaumbildung bei der Applikation hoher Schichtdicken, induziert durch die am Bau allgegenwärtige Feuchtigkeit. In dieser Hinsicht sind Systeme mit kurzer Verarbeitungszeit, die üblicherweise durch Spritzen appliziert werden, oder auch solche, die anstelle der Polyhydroxy-Verbindungen Amine enthalten, kaum problematisch. Anders ist es bei Systemen mit langen Verarbeitungszeiten; hier spielt deren Hydrophilie bzw. Hydrophobie und die damit einhergehende Wasseraufnahme aus der Umgebung eine wesentliche Rolle. Bewährt haben sich in diesem Zusammenhang beispielsweise durch Fettsäure hydrophob modifizierte Polyether-Polyole. Notwendig ist die Mitverwendung von Molekularsieben, die das durch Füllstoffe, Pigmente u.ä. eingetragene Wasser binden. Mit diesen Produktvariationen werden baustellengerechte Fußbodenbeschichtungsstoffe erhalten.

Die Herstellung der Beschichtungsmaterialien erfolgt z.B. im Dissolver oder Butterflymischer möglichst unter Vakuum. Hierbei werden Füllstoffe, Pigmente, Molekularsieb und oberflächenaktive Additive in die Polyolkomponente eingearbeitet. Die Produktion unter Vakuum erleichtert das Entfernen von Luft, so dass die Benetzung der Zuschlagstoffe durch das Bindemittel verbessert wird. Vor dem Abfüllen des Beschichtungsmaterials in Arbeitspackungen wird zusätzlich ein geeignetes Entlüftungsmittel, z.B. auf Silicon-Basis, zugesetzt. Dieser nachträgliche Zusatz gewährleistet eine porenfreie, glatte Oberfläche der Beschichtung.

Vor der Anwendung der Polyurethanbeschichtung muss sichergestellt sein, dass Voraussetzungen, die generell für Bodenbeschichtungen gelten, erfüllt sind. Diese sind in der "Richtlinie für Schutz und Instandsetzung von Betonbauteilen" des Deutschen Ausschusses für Stahlbeton niedergelegt . Gefordert wird die Abwesenheit von losen Teilen, Schlempe und Verunreinigungen, aber auch, dass die Applikation nur auf tragfähigen, trockenen bis schwach feuchten Untergründen (üblicherweise ≤ 4 % Wasser) vorzunehmen ist, deren Oberflächenabreißfestigkeit bei mindestens 1,5 MPa liegen muss. Dabei sollte die Umgebungstemperatur beim Verarbeiten zwischen 8 und 40 °C liegen und die Objekttemperatur mindestens drei Grad über der Taupunkttemperatur.

Die Vermischung der Polyol- und Polyisocyanat-Komponenten vor Ort erfolgt mit Hilfe eines Käfig- oder Flügelmischers. Der Schichtaufbau besteht üblicherweise aus einer Grundierung, einer ggf. notwendigen Kratzspachtelung zur Beseitigung von Unebenheiten und der eigentlichen Fußbodenbeschichtung. Der Auftrag erfolgt mittels Rolle oder Zahnspachtel. Der Aufbau kann abschließend mit einem dekorativen, abriebfesten Decklack komplettiert werden.

Nachteilig bei allen diesen Formulierungskomponenten auf Polyurethan-Basis ist die Tatsache, dass diese Produkte isocyanathaltig sind und teilweise große Mengen an Lösemittel enthalten, so dass von diesen Komponenten ein signifikantes Gefahrenpotential für Mensch und Umwelt ausgeht, weshalb bei deren Verarbeitung besondere Umweltschutz- und Sicherheitsmaßnahmen erforderlich sind. Außerdem härten diese isocyanathaltigen Formulierungen bei tiefen Temperaturen äußerst langsam aus und erreichen durch die Nebenreaktion mit Luftfeuchtigkeit oftmals nur ein vermindertes Eigenschaftsniveau.

### Darstellung der Erfindung

Der vorliegenden Erfindung lag daher die Aufgabe zugrunde, Formulierungen für rissüberbrückende Beschichtungssysteme auf Basis von Polyurethan-Dispersionen zu entwickeln, welche die genannten Nachteile des Standes der Technik nicht aufweisen, sondern sich sowohl durch gute Umweltverträglichkeit als auch durch eine verbesserte Verarbeitbarkeit auszeichnen.

Diese Aufgabe wurde erfindungsgemäß dadurch gelöst, dass man wässrige, isocyanatfreie Polyurethan-Dispersionen mit einem Festkörper-Gehalt von ≥ 30 Gew.-% und einem Lösemittel-Gehalt von ≤ 10 Gew.-% in Formulierungen für rissüberbrückende Beschichtungssysteme verwendet, die ausgewählt sind aus:
a) Grund-, Schwimm-, Deckschichten, Spritzbeschichtungen und/oder Versiegelungen auf vorzugsweise grundierten Bauwerksoberflächen,
b) (ggf. flammgeschützten) Dach-Beschichtungen oder -Anstrichen, sowie
c) (ggf. flammgeschützten) Abdichtungen von Bauwerken im Tage- oder Untertagebau,
wobei die Formulierungen einzeln oder in Kombination zum , Systemaufbau von rissüberbrückenden Beschichtungssystemen in der Form eingesetzt werden, wie sie im Patentanspruch 1 spezifiziert sind, die rissüberbrückenden Beschichtungssysteme in 1- oder 2-komponentiger Form zum Einsatz kommen und bei 2-komponentiger Applikation die Formulierungen auf Basis der Polyurethan-Dispersionen als Bindemittel und zur Nachvernetzung geeignete Substanzen als Härter-Komponente eingesetzt werden.

Es hat sich nämlich überraschenderweise gezeigt, dass diese Polyurethan-Dispersionen nicht nur umweltfreundlicher und leichter verarbeitbar sind, sondern darüber hinaus auch teilweise verbesserte Produkteigenschaften der entsprechenden rissüberbrückenden Beschichtungssysteme, wie z. B. mechanische Eigenschaften (Zugfestigkeit, Dehnung bei der Zugfestigkeit, Reißdehnung), UV-Beständigkeit sowie Farbstabilität, ermöglichen.

Die erfindungsgemäß vorgeschlagenen wässrigen, isocyanatfreien Polyurethan-Dispersionen weisen einen Feststoff-Gehalt von ≥ 30 Gew.-%, vorzugsweise 40 bis 60 Gew.-%, und einen Lösemittel-Gehalt von ≤ 10 Gew.-%, vorzugsweise ≤ 5 Gew.-%, auf. Unter "isocyanatfrei" im Sinne der vorliegenden Erfindung wird ein Isocyanatgehalt der Polyurethan-Dispersion < 0,1 Gew.-%, bevorzugt < 0,01 Gew.-% verstanden. Besonders bevorzugt enthält die erfindungsgemäß verwendete Polyurethandispersion überhaupt kein Isocyanat. Vorzugsweise werden Polyurethan-Dispersionen auf Basis von Polypropylenglykolen, Polycarbonat-Polyolen oder Gemischen daraus mit einer mittleren Molekularmasse von 500 bis 5000 Dalton eingesetzt. Gemäß einer besonders bevorzugten Ausführungsform werden lösemittelfreie Polyurethan-Dispersionen auf Basis von Polypropylenglykolen mit einem Festkörpergehalt von 50 bis 60 Gew.-% sowie lösemittelarme Polyurethan-Dispersionen auf Basis von Polycarbonat-Polyolen mit einem Festkörper-Gehalt von 45 bis 55 Gew.-% und einem Lösemittel-Gehalt von ≤ 5 Gew.-% eingesetzt.

Die Polyurethan-Dispersionen basieren vorzugsweise auf Polyurethan-Prepolymeren, die mit einem NCO/OH-Equivalentverhältnis von 1,2 bis 2,2, insbesondere 1,4 bis 2,0 hergestellt wurden.

Die Polyurethan-Dispersionen basieren bevorzugt auf Polyurethan-Prepolymeren, die einen Gehalt an Carboxylat-Gruppen von 10 bis 40 meq (100 g)⁻¹, insbesondere 15 bis 35 meq (100 g)⁻¹, sowie eine Säurezahl von 5 bis 25 meq KOH g⁻¹, insbesondere 7,5 bis 22,5 meq KOH g⁻¹, aufweisen.

Die Polyurethan-Dispersionen weisen eine bevorzugte mittlere Partikelgröße von 50 bis 500 nm auf, wobei sich die entsprechenden Angaben auf Messungen mit Hilfe der Photonenkorrelationsspektroskopie (PCS) beziehen.

Die Polyurethan-Polymere besitzen eine bevorzugte mittlere Molekularmasse von 50 000 bis 500 000 Dalton, wobei sich die entsprechenden Angaben auf das Zahlenmittel Mₙ und Messungen mit Hilfe der Gelpermeationschromatographie (GPC) beziehen.

Derartige wässrige Polyurethan-Dispersionen sind bereits bekannt, wobei die bevorzugten Polyurethan-Dispersion sowie deren Herstellung in den deutschen Patentanmeldungen DE 198 12 751 und DE 199 59 170 beschrieben sind.

Das Herstellungsverfahren gemäß DE 199 59 170 ist hierbei dadurch gekennzeichnet, dass man
a) zunächst eine Vormischung aus einer Polyol-Komponente (A), bestehend aus 5 bis 25 Gew.-Teilen eines Diols (A) (i) mit einer Molmasse von 500 bis 5000 Dalton, 0,5 bis 5 Gew.-Teilen eines Polyhydroxyalkans (A) (ii) sowie 0 bis 5 Gew.-Teilen einer anionisch modifizierbaren Dihydroxyalkancarbonsäure (A) (iii) und 0 bis 9 Gew.-Teilen einer Lösemittel-Komponente (B) herstellt,
b) 5 bis 50 Gew.-Teilen einer Polyisocyanat-Komponente (C) mit 11 bis 39 Gew.-Teilen der Vormischung aus Stufe a) zu einem Polyurethan-Preaddukt umsetzt, wobei das NCO/OH-Equivalentverhältnis in dieser Stufe 1,75 bis 8,0 beträgt,
c) das Polyurethan-Preaddukt aus Stufe b) entweder mit 5 bis 33 Gew.-Teilen der Vormischung aus Stufe a) oder 0,5 bis 5 Gew.-Teilen einer anionisch modifizierbaren Dihydroxyalkancarbonsäure (A) (iii) zu einem Polyurethan-Prepolymer umsetzt, wobei das NCO/OH-Equivalentverhältnis in dieser Stufe 1,5 bis 5,0 beträgt,
d) das Polyurethan-Prepolymer aus Stufe c) dann mit einem vorgefertigten Gemisch aus 5 bis 225 Gew.-Teilen Wasser, 0,5 bis 4 Gew.-Teilen einer Neutralisations-Komponente (D) und 0 bis 1 Gew.-Teilen einer Entschäumer-Komponente (E) vermischt und anschließend oder gleichzeitig
e) das wässrige Polyurethan-Prepolymer aus Stufe d) mit 0,025 bis 4 Gew.-Teilen einer Kettenverlängerungs-Komponente (F), die mit zuvor entnommenen Anteilen des Wassers aus Stufe d) im Verhältnis 1 : 10 bis 10 : 1 verdünnt wird, umsetzt.

In der Reaktionsstufe a) wird zunächst eine Vormischung einer Polyol-Komponente (A), bestehend aus 5 bis 25 Gew.-Teilen eines Diols (A) (i) mit einer Molmasse von 500 bis 5000 Dalton, 0,5 bis 5 Gew.-Teilen eines Polyhydroxyalkans (A) (ii) sowie 0 bis 5 Gew.-Teilen einer anionisch modifizierbaren Dihydroxyalkancarbonsäure (A) (iii), und 0 bis 9 Gew.-Teilen einer Lösemittel-Komponente (B) hergestellt. Die Durchführung der Reaktionsstufe a) ist im Hinblick auf die Reaktionsbedingungen relativ unproblematisch. Die Komponenten (A) (i), (A) (ii) sowie ggf. (A) (iii) und (B) werden in beliebiger Reihenfolge zugegeben und vermischt, bis eine homogene Lösung vorliegt. Die Reaktionsstufe a) wird bei einer bevorzugten Temperatur von 20 bis 120 °C, insbesondere bei 60 bis 80°C, durchgeführt.

Die Komponente (A) (i) mit einem Anteil von 5 bis 25 Gew.-Teilen besteht aus mindestens einem höhermolekularen Diol mit zwei gegenüber Polyisocyanaten reaktiven Hydroxyl-Gruppen und einer mittleren Molekularmasse (Zahlenmittel Mₙ) von 500 bis 5000 Dalton, insbesondere 1000 bis 4000 Dalton, und zwar insbesondere auf Basis eines Polyether-, Polyester-, α,ω-Polymethacrylat-Diols oder Gemischen daraus. Dabei handelt es sich vorzugsweise um polymere Diole wie Polyalkylenglykole, aliphatische oder aromatische Polyester, Polycaprolactone, Polycarbonate, Makromonomere, Telechele oder Epoxid-Harze oder Gemische daraus. Polyalkylenglykole werden aus Monomeren wie Ethylenoxid, Propylenoxid, Butylenoxid, Styroloxid, Tetrahydrofuran durch Polymerisation in Gegenwart von Bortrifluorid oder durch Polyaddition an Starterverbindungen mit reaktiven Wasserstoffatomen wie Wasser, Alkohole, Amine oder Bisphenol A erhalten. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol®-Typen der Fa. Dow, Acclaim®-Typen der Fa. Lyondell), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Bevorzugt werden lineare bzw. difunktionelle Polypropylenglykole mit einer mittleren Molekularmasse (Zahlenmittel Mₙ) von 1000 bis 4000 Dalton eingesetzt.

Aliphatische oder aromatische Polyester-Diole werden durch Polykondensationsreaktion und/oder Polyadditionsreaktion aus zwei- oder mehrwertigen Alkoholen und zwei- oder mehrwertigen Carbonsäuren, Carbonsäureanhydriden oder Carbonsäureestern erhalten. Als geeignete aliphatische oder aromatische Polyester können bspw. Kondensate auf Basis von 1,2-Ethandiol bzw. Ethylenglykol, 1,4-Butandiol bzw. 1,4-Butylenglykol, 1,6-Hexandiol bzw. 1,6-Hexamethylenglykol und 2,2-Dimethyl-1,3-propandiol bzw. Neopentylglykol sowie 1,6-Hexandisäure bzw. Adipinsäure und 1,3-Benzoldicarbonsäure bzw. Isophthalsäure (z.B. Bester-Typen der Fa. Poliolchimica) eingesetzt werden. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere werden durch Umsetzung von Phosgen bzw. aliphatischen oder aromatischen Carbonaten, wie bspw. Diphenylcarbonat oder Diethylcarbonat, mit zwei- oder mehrwertigen Alkoholen erhalten. Letztere werden durch Polyaddition von Lactonen, wie bspw. ε-Caprolacton, an Starterverbindungen mit reaktiven Wasserstoffatomen wie Wasser, Alkohole, Amine oder Bisphenol A hergestellt. Denkbar sind auch synthetische Kombinationen von Polyestern, Polycaprolactonen und Polycarbonaten. Bevorzugt werden lineare bzw. difunktionelle aliphatische oder aromatische Polyester-Polyole mit einer mittleren Molekularmasse (Zahlenmittel Mₙ) von 1000 bis 4000 Dalton. Ebenfalls geeignet sind Makromonomere, Telechele oder Epoxid-Harze. Als geeignete Makromonomere und Telechele können Polyhydroxyolefine, wie bspw. α,ω-Dihydroxypolybutadiene, α,β-Dihydroxypoly(meth)acrylate, α,ω-Dihydroxypoly(meth)acrylate oder α,ω- Dihydroxypolysiloxane, eingesetzt werden. Bevorzugt werden α,ω-Dihydroxypolyolefine, wie bspw. α,ω-Poly(methylmethacrylat)-Diol (Handelsname: TEGO® Diol MD-1000) der Molekularmasse 1000 Dalton, α,ω-Poly(n-butylmethacrylat)-Diole der Molekularmasse 1000 und 2000 Dalton (Handelsname: TEGO® Diol BD-1000, TEGO® Diol BD-2000) oder α,ω-Poly(2-ethylhexylmethacrylat)-Diol (Handelsname: TEGO® Diol OD-2000) der Firma Tego Chemie Service GmbH. Bei den Epoxid-Harzen handelt es sich vorzugsweise um hydroxyfunktionelle Derivate des Bisphenol-A-diglycidethers (BADGE).

Vorzugsweise werden also lineare bzw. difunktionelle aliphatische oder aromatische Polyalkylenglykole, Polyesterpolyole und α,ω-Dihydroxypolyolefine mit einer mittleren Molekularmasse (Zahlenmittel Mₙ) von 1000 bis 4000 Dalton eingesetzt.

Die Komponente (A) (ii) mit einem Anteil von 0,5 bis 5 Gew.-Teilen besteht aus mindestens einem niedermolekularen Polyhydroxyalkan mit zwei oder mehreren gegenüber Polyisocyanaten reaktiven Hydroxyl-Gruppen und einer Molekularmasse von 50 bis 500 Dalton. Als geeignete niedermolekulare Polyhydroxyalkane können bspw. 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol (Handelsname MPDiol Glycol® der Fa. Arco Chemical), 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propandiol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden.

Die Komponente (A) (iii) mit einem Anteil von 0 bis 5 Gew.-Teilen besteht aus mindestens einer niedermolekularen und anionisch modifizierbaren Dihydroxyalkancarbonsäure mit zwei gegenüber Polyisocyanaten reaktiven Hydroxyl-Gruppen und einer oder mehreren gegenüber Polyisocyanaten inerten Carboxyl-Gruppen, die in Gegenwart von Basen ganz oder teilweise in Carboxylat-Gruppen überführt werden können. Als niedermolekulare und anionisch modifizierbare Dihydroxyalkancarbonsäuren können bspw. 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, eingesetzt werden. Bevorzugt werden Bishydroxyalkancarbonsäuren mit einer Molekularmasse von 100 bis 200 Dalton eingesetzt und vorzugsweise Dimethylolpropionsäure (Handelsname DMPA® der Fa. Mallinckrodt).

Die Lösemittel-Komponente (B) mit einem Anteil von 0 bis 9 Gew.-Teilen besteht aus mindestens einem, gegenüber Polyisocyanaten inerten und mit Wasser ganz oder teilweise mischbaren Solvens, das nach der Herstellung in der Polyurethan-Dispersion verbleibt oder durch Destillation ganz oder teilweise entfernt wird. Solvenzien, die nach der Herstellung in der Dispersion verbleiben, fungieren als Koaleszenz-Hilfsmittel. Geeignete Solvenzien sind beispielsweise hochsiedende Lösemittel wie N-Methylpyrrolidon, Dipropylenglykoldimethylether (Proglyde DMM® der Fa. Dow), niedrigsiedende Lösemittel wie Aceton, Butanon oder beliebige Gemische daraus. Bevorzugt werden hochsiedende und hydrophile organische Lösemittel mit einem Siedepunkt über 180 °C (Normaldruck) und vorzugsweise N-Methylpyrrolidon verwendet.

In der Reaktionsstufe b) werden 11 bis 39 Gew.-Teile der Vormischung aus Stufe a) mit 5 bis 50 Gew.-Teilen einer Polyisocyanat-Komponente (C) zu einem Polyurethan-Preaddukt umgesetzt, wobei das NCO/OH-Equivalentverhältnis in dieser Stufe 1,75 bis 8,0 beträgt. Das NCO/OH-Equivalentverhältnis der Komponenten (C) und (A) wird in Reaktionsstufe b) vorzugsweise auf einen Wert von 2,5 bis 4,0 eingestellt. Die Durchführung der Reaktionsstufe b) ist im Hinblick auf die Reaktionsbedingungen relativ unkritisch. Die Bildung des Polyurethan-Preaddukts erfolgt in der Weise, dass die Komponente (C) innerhalb eines Zeitraumes von einigen Minuten mit einem Teil der Vormischung aus Reaktionsstufe a) bestehend aus den Komponenten (A) (i), (A) (ii) und ggf. (A) (iii) sowie (B) versetzt wird. Die Reaktionsstufe b) wird bei einer bevorzugten Temperatur von 60 bis 120 °C, insbesondere bei 80 bis 100 °C, durchgeführt. Aufgrund des großen Überschusses der Polyisocyanat-Komponente (C) gegenüber der Polyol-Komponente (A) kann in der Reaktionsstufe b) je nach Viskosität mit sehr wenig bzw. ohne Lösemittel gearbeitet werden. Es ergeben sich streng NCO-terminierte kurzkettige Polyurethan-Preaddukte.

Die Polyisocyanat-Komponente (C) besteht aus mindestens einem Polyisocyanat, Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Diisocyanate können bspw. 1,6-Diisocyanatohexan (HDI), 1-Isocyanato-5-isocyanatomethyl-3,3,5-trimethylcyclohexan bzw. Isophorondiisocyanat (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomerengemische der einzelnen aromatischen Polyisocyanate eingesetzt werden. Als geeignete aromatische Diisocyanate können beispielsweise 2,4-Diisocyanatoluol bzw. Toluoldiisocyanat (TDI), Bis-(4-isocyanatophenyl)-methan (MDI) und ggf. dessen höhere Homologe (Polymeric MDI) bzw. technische Isomerengemische der einzelnen aromatischen Polyisocyanate eingesetzt werden. Weiterhin sind auch die sogenannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethylcyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Restgehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Vorzugsweise wird als aliphatisches Polyisocyanat Isophorondiisocyanat eingesetzt.

In der Reaktionsstufe c) wird das Polyurethan-Preaddukt aus Stufe b) dann entweder mit 5 bis 33 Gew.-Teilen der Vormischung aus Stufe a) oder 0,5 bis 5 Gew.-Teilen der anionisch modifizierbaren Dihydroxyalkancarbonsäure (A) (iii) zu einem Polyurethan-Prepolymer umgesetzt, wobei das NCO/OH-Equivalentverhältnis in dieser Stufe 1,5 bis 8,0 beträgt. Das NCO/OH-Equivalentverhältnis des Polyurethan-Preadduktes aus Stufe b) und der Komponente (A) wird in Reaktionsstufe c) vorzugsweise auf einen Wert von 1,6 bis 3,0 eingestellt. Die Bildung des Polyurethan-Prepolymers erfolgt in der Weise, dass das Polyurethan-Preaddukt aus Stufe b) innerhalb eines Zeitraumes von einigen Minuten mit dem Rest der Vormischung aus Stufe a) bestehend aus den Komponenten (A) (i), (A) (ii), A) (iii) und ggf. (B) versetzt wird. Das in Reaktionsstufe c) eingesetzte Polyurethan-Preaddukt aus Reaktionsstufe b) kann bei entsprechender Prozessführung bzw. unvollständiger Umsetzung neben Isocyanat-Gruppen ggf. auch noch freie Hydroxyl-Gruppen aufweisen. Die Reaktionsstufe c) wird bei einer bevorzugten Temperatur von 60 bis 120 °C, insbesondere bei 80 bis 100 °C, durchgeführt.

Das bevorzugte NCO/OH-Equivalent-Verhältnis der Gesamtmenge der Komponenten (A) (Polyole) und (C) (Polyisocyanate) wird auf einen bevorzugten Wert von 1,2 bis 2,2, insbesondere 1,4 bis 2,0, eingestellt.

Die Umsetzung der Komponenten (A) und (C) in den Reaktionsstufe b) und c) kann in Gegenwart eines für Polyadditionsreaktionen an Polyisocyanaten üblichen Katalysatorsystems erfolgen. Bei Bedarf erfolgt ein Zusatz dieser Katalysatoren in Mengen von 0,01 bis 1 Gew.-Teilen bezogen auf den Reaktionsansatz. Gebräuchliche Katalysatoren für Polyadditionsreaktionen an Polyisocyanate sind bspw. Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU).

In den Reaktionsstufen b) und c) wird der Reaktionsansatz unter Ausnutzung der Exothermie der Polyadditionsreaktion bis zum Erreichen des berechneten bzw. theoretischen NCO-Gehaltes vorzugsweise unter Inertgasatmosphäre gerührt. Die erforderlichen Reaktionszeiten liegen im Bereich von wenigen Stunden und werden durch Reaktionsparameter wie die Reaktivität der Komponenten, die Stöchiometrie der Komponenten und die Temperatur maßgebend beeinflusst.

Gemäß einer bevorzugten Ausführungsform wird die Herstellung des Polyurethan-Prepolymers so durchgeführt, dass in Stufe a) eine Vormischung der Komponente (A) (i), (A) (ii), (A) (iii) und ggf. (B) hergestellt wird und die Vormischung aus Stufe a) dann in der Stufe b) und c) eingesetzt wird.

Alternativ dazu wird in Stufe a) eine Vormischung der Komponente (A) (i), (A) (ii) und ggf. (B) hergestellt, die Vormischung aus Stufe a) dann in Stufe b) vollständig eingesetzt und die Komponente (A) (iii) erst in Stufe c) umgesetzt.

Diese mehrstufige Zugabe der Polyol-Komponente führt aufgrund der wechselnden NCO/OH-Equivalentverhältnisse während der Polyadditionsreaktion zu einer anderen Reaktionskinetik und somit zu einem anderen Aufbau des Polyurethan-Polymers als beim konventionellen Prepolymer Mixing Process nach dem Eintopfverfahren. Bei geeigneter Prozessführung und Verwendung von Diisocyanaten mit Isocyanat-Gruppen unterschiedlicher Reaktivität werden weitgehend symmetrische Polyurethan-Preaddukte und Polyurethan-Prepolymere erhalten, in denen die Hydroxyl-Gruppen der einzelnen Polyole mit Isocyanat-Gruppen gleicher Reaktivität zur Umsetzung kommen. Unter geeigneter Prozessführung ist in diesem Zusammenhang insbesondere die Aufteilung der in Reaktionsstufe a) hergestellten Vormischung auf die Reaktionsstufen b) und c) zu verstehen. Diisocyanate mit Isocyanat-Gruppen unterschiedlicher Reaktivität liefern zudem engere Molekularmassen-verteilungen mit geringerer Uneinheitlichkeit. Dementsprechend werden Polyurethan-Preaddukte und Polyurethan-Prepolymere mit linearer Struktur bevorzugt, die sich aus Diol- und Diisocyanat-Komponenten zusammensetzen. Die Ausbildung dieser symmetrischen Segmentstrukturen wird durch die milde Temperaturführung während der Polyadditionsreaktion begünstigt. In den Reaktionsstufen b) und c) ist jeweils nur eine schwache Exothermie der Polyadditionsreaktion beobachtbar, die Reaktionstemperatur steigt endogen nicht über 90 °C an. Dadurch können auch unerwünschte Nebenreaktionen der NCO-Gruppen z.B. mit den Carboxylat-Gruppen ohne besondere Temperaturkontrolle auf einfache Weise unterdrückt werden.

Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der Dispergiereigenschaften der Polyurethan-Prepolymere ist daher nur in geringen Mengen erforderlich. Die besondere Struktur der Polyurethan-Prepolymere ermöglicht nachfolgend die Herstellung von Produkten mit außerordentlich guten mechanischen Eigenschaften und vergleichsweise hohen Festkörper-Gehalten. Außerdem werden aufgrund der gleichmäßigen Verteilung der Carboxyl- bzw. Carboxylat-Gruppen über das Polyurethan-Polymer nur moderate Ladungsdichten für die Stabilisierung der entsprechenden Polyurethan-Dispersionen benötigt. In der Reaktionsstufe d) wird das Polyurethan-Prepolymer aus Stufe c) mit einem vorgefertigten Gemisch, bestehend aus 5 bis 225 Gew.-Teilen Wasser, 0,5 bis 4 Gew.-Teilen einer Neutralisations-Komponente (D) und 0 bis 1,0 Gew.-Teilen einer Entschäumer-Komponente (E) vermischt. Die Reaktionsstufe d) wird bei einer bevorzugten Temperatur von 20 bis 80 °C , insbesondere bei 40 bis 60 °C durchgeführt. Die Neutralisations-Komponente (D) wird gemäß einer bevorzugten Ausführungsform in einer solchen Menge eingesetzt, dass der Neutralisationsgrad bezogen auf die freien Carboxyl-Gruppen des Polyurethan-Prepolymers bei 70 bis 100 Equivalent-%, vorzugsweise bei 80 bis 100 Equivalent-%, liegt. Die Neutralisations-Komponente (D) wird zur vollständigen oder teilweisen Neutralisation der Carboxyl-Gruppen im Dispergiermedium vorgelegt (indirekte Neutralisation). Bei der Neutralisation werden aus den Carboxyl-Gruppen Carboxylat-Gruppen gebildet, die zur anionischen Modifizierung bzw. Stabilisierung der Polyurethan-Dispersion dienen. Alternativ dazu kann das Polyurethan-Prepolymer aus Reaktionsstufe c) ggf. auch in das vorgefertigte Gemisch aus Wasser, der Neutralisations-Komponente (D) und der Entschäumer-Komponente (E) eingerührt werden oder die Neutralisations-Komponente (D) ggf. auch bereits nach Reaktionsstufe c) in das Polyurethan-Prepolymer eingerührt werden (direkte Neutralisation). Alle kationischen Gegenionen zu den anionischen Carboxylat-Gruppen sind im Dispergiermedium gelöst. Die Begriffe "Dispergierung" bzw. "Dispersion" beinhalten, dass neben dispergierten Komponenten mit micellarer Struktur auch solvatisierte und/oder suspendierte Komponenten enthalten sein können.

Die Neutralisierungs-Komponente (D) mit einem Anteil von 0,5 bis 4 Gew.-Teilen besteht aus einer oder mehreren Basen, die zur vollständigen oder teilweisen Neutralisation der Carboxyl-Gruppen dienen. Als geeignete Basen können tertiäre Amine wie N,N-Dimethylethanolamin, N-Methyldiethanolamin, Triethanolamin, N,N-Dimethylisopropanolamin, N-Methyldiisopropanolamin, Triisopropylamin, N-Methylmorpholin, N-Ethylmorpholin, Triethylamin oder Ammoniak sowie Alkalihydroxide (NaOH, KOH) verwendet werden. Bevorzugt werden tertiäre Amine und insbesondere Triethylamin eingesetzt.

Die Entschäumer-Komponente (E) mit einem Anteil von 0 bis 1 Gew.-Teilen besteht aus einem oder mehreren für Polyurethan-Dispersionen üblichen Entschäumern, die zur Entgasung (Luft, Kohlendioxid) dienen und der Schaumbildung entgegenwirken. Erhärteter Schaum ist nicht redispergierbar und setzt sich ansonsten in Form von feinen Nadeln als Niederschlag ab. Geeignete Entschäumer sind bspw. Produkte der Firmen Tego Chemie Service GmbH (Typen TEGO® Foamex 800 und 805), Byk Chemie GmbH (Typ Byk-024)

Nach Erreichen des theoretischen Gesamt-NCO-Gehalts wird das Polyurethan-Prepolymer nicht in Wasser dispergiert, wie bei den in der Patentliteratur oft beschriebenen Verfahren, sondern gemäß einer bevorzugten Ausführungsform im Reaktionsgefäß mit einer Mischung aus Wasser, einer Neutralisations-Komponente und einer Entschäumer-Komponente ohne Scherkräfte zunächst überschichtet und schließlich mit Hilfe eines Dissolvers unter intensivem Rühren binnen weniger Minuten vollständig dispergiert. Diese Vorgehensweise hat den Vorteil, dass im Reaktionsgefäß selbst dispergiert werden kann und sogar Polyurethan-Prepolymere von hoher Viskosität extrem leicht zu verarbeiten sind. Das Polyurethan-Prepolymer wird hierbei nicht langsam in das Dispergiermedium eingebracht, sondern mit der Gesamtmenge an Dispergiermedium überschichtet und dann sofort verrührt. Alternativ zu dieser Vorgehensweise kann das Polyurethan-Prepolymer aus Stufe c) in das vorgefertigte Gemisch aus Wasser, der Neutralisationskomponente (D) und der Entschäumer-Komponente (E) eingemischt werden.

Bei Verwendung identischer Rezepturen führt das vorgeschlagene Verfahren aus mehrstufiger Prepolymersynthese und Inversverfahren im Vergleich mit dem Prepolymer Mixing Process zu Polyurethan-Dispersionen mit etwas höheren Festkörpergehalten und verbesserten mechanischen Eigenschaften. Ein weiterer Vorteil der Dispergiermethode durch Überschichten des Polyurethan-Prepolymer-Harzes mit dem Dispergiermedium liegt in der besonders hohen Effizienz, mit der das Polyurethan-Prepolymer vollständig in die wässrige Phase gebracht wird. Im Reaktor oder den Rohrleitungen verbleiben somit keine Rückstände an Polyurethan-Prepolymer, die Reinigung wird daher erheblich erleichtert.

In der Reaktionsstufe e) wird die Polyurethan-Prepolymer-Dispersion aus Reaktionsstufe d) mit 0,025 bis 4 Gew.-Teilen einer Kettenverlängerungs-Komponente (F) umgesetzt. Die Reaktionsstufe e) wird bei einer bevorzugten Temperatur von 20 bis 80 °C , insbesondere bei 30 bis 50 °C durchgeführt. Die Kettenverlängerungs-Komponente (F) wird gemäß einer bevorzugten Ausführungsform in einer solchen Menge eingesetzt, dass der Kettenverlängerungsgrad bezogen auf die freien Isocyanat-Gruppen des Polyurethan-Prepolymers bei 10 bis 100 Equivalent-%, vorzugsweise bei 50 bis 100 Equivalent-%, liegt. Die Kettenverlängerungs-Komponente (F) wird in der Reaktionsstufe e) im Verhältnis 1 : 10 bis 10 : 1 in vorab entnommenen Anteilen des Dispergiermediums gelöst und anschließend zugegeben. Die Kettenverlängerung der Polyurethan-Prepolymer-Dispersion führt zum Aufbau der Molekularmasse innerhalb der Micellen und zur Bildung einer Polyurethan-Polyharnstoff-Dispersion hoher Molekularmasse. Die Kettenverlängerungs-Komponente (F) reagiert dabei mit reaktiven Isocyanat-Gruppen wesentlich rascher als Wasser. Im Anschluss an die Reaktionsstufe e) können evtl. noch vorhandene freie Isocyanat-Gruppen mit Wasser vollständig kettenverlängert werden. Alternativ dazu kann die Kettenverlängerungs-Komponente (F) ggf. auch bereits in Reaktionsstufe d) als vorgefertigtes Gemisch mit Wasser, der Neutralisations-Komponente (D) und der Entschäumer-Komponente (E) verwendet werden.

Die Kettenverlängerungs-Komponente (F) besteht aus mindestens einem Polyamin mit zwei oder mehreren gegenüber Polyisocyanaten reaktiven Amino-Gruppen. Geeignete Polyamine sind beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin, Addukte aus Salzen der (Meth)acrylsäure und Ethylendiamin oder beliebige Kombinationen dieser Polyamine. Bevorzugt werden difunktionelle primäre Amine und insbesondere Ethylendiamin eingesetzt.

Die Verarbeitungszeit zwischen dem Abschluss der Stufe c) und dem Abschluss der Stufe e) beträgt vorzugsweise weniger als 1 Stunde, insbesondere weniger als 30 Minuten.

Mit Hilfe der erfindungsgemäß vorgeschlagenen wässrigen, isocyanatfreien Polyurethan-Dispersionen können alle bisherigen auf Polyurethan basierenden Produkte bei der Formulierung von rissüberbrückenden Beschichtungssystemen ersetzt werden.

Die erfindungsgemäß vorgeschlagenen wässrigen Polyurethan-Dispersionen werden bei der Herstellung von Formulierungen für rissüberbrückende Beschichtungssysteme als Bindemittel für
a) selbstverlaufende Grund-, Schwimm- und Deckschichten,
b) (ggf. flammgeschützte) Spritzbeschichtungen,
c) (ggf. flammgeschützte,) lichtechte und pigmentierte Grund- und Deckschichten, sowie Versiegelungen,
d) einkomponentige, pigmentierte und lichtechte Deckschichten,
e) zweikomponentige, farblose und lichtechte Versiegelungen,
f) zweikomponentige, pigmentierte und lichtechte Versiegelungen
eingesetzt.

Gemäss einer besonders bevorzugten Ausführungsform enthalten die erfindungsgemäß vorgeschlagenen Formulierungen 25 bis 99 Gew.-% an wässrigen Polyurethan-Dispersionen und 15 bis 50 Gew.-% an Polyurethan-Polymeren.

Als Formulierungs-Komponenten werden neben dem Bindemittel Füllstoffe (auch wasserbindende Füllstoffe wie z.B. Zement), Pigmente, Weichmacher, Fasermaterialien, Entschäumer, Entlüfter, Gleit- und Verlaufadditive, Dispergieradditive, Substratnetzadditive, Hydrophobierungsmittel, Rheologieadditive, Haftvermittler, Flammschutzmittel, Frostschutzmittel, Mattierungsmittel, Antioxidantien, UV-Stabilisatoren, Bakterizide, Fungizide und Konservierungsmittel eingesetzt. Die Herstellung und Applikation der Formulierungen erfolgt mit den aus Lack- und Beschichtungstechnologie bekannten Methoden und bedarf keiner weiteren Erläuterung.

Die erfindungsgemäß vorgeschlagenen Formulierungen werden einzeln oder in Kombination zum Systemaufbau von rissüberbrückenden Beschichtungssystemen in Form von
a) Parkdeck- und Parkhausbelägen,
b) Brücken- und Brückenkappenabdichtungen,
c) Balkonbeschichtungen,
d) (ggf. flammgeschützten) Abdichtungen von Flachdächern mit zementösen metallischen, bituminösen oder polymeren Untergründen,
e) (ggf. flammgeschützten) UV-Schutzanstrichen auf abgewittertem oder neuem Dachschaum, und
f) Bauwerksabdichtungen unter Begrünungen
eingesetzt.

Die erfindungsgemäßen Formulierungen auf Basis ,von Polyurethan-Dispersionen können je nach Anwendung und Systemaufbau in Schichten mit einer Gesamtdicke von 0,05 bis 50 mm auf die elastischen oder starren Untergründe aufgebracht werden. Hierzu sind in der Regel 0,1 bis 10,0 kg der Formulierungen auf Basis von Polyurethan-Dispersionen pro m² der zu beschichtenden Fläche und pro Arbeitsgang notwendig.

Ggf. kann durch den Einsatz von UV-Stabilisatoren vom Typ der sterisch gehinderten Amine in Konzentrationen von 0,1 bis 5,0 Gew.-% bezogen auf die Gesamtmasse der Formulierung die Kreidungs- und Dauerwasserbeständigkeit (Warmwasser von ca. 50 °C) von Formulierungen auf Basis von Polyurethan-Dispersionen wesentlich erhöht werden. Dies konnte eindeutig in einem speziell für diesen Zweck konzipierten Gerät in einem Extremklima (intensive UV-Strahlung, erhöhte Temperatur, gleichzeitige Beregnung) nachgewiesen werden.

Auch bei auf gleiche Weise geschützten konventionellen (isocyanathaltigen) Beschichtungen konnte eine deutliche Verbesserung erreicht werden. Bei den verwendeten UV-Stabilisatoren handelt es sich um Systeme vom HALS-Typ (Hindered Amine Light Stabilizer), wie z.B 1,2,2,6,6-Pentamethyl-4-piperidinylester der Dekandisäure (HALS I) oder 2,2,6,6-Tetramethyl-1-isooctyloxy-4-piperidinylester der Dekandisäure (HALS II). Bevorzugt werden HALS-I-Typen eingesetzt. In Kombination mit UV-Stabilisatoren vom HALS-Typ können daneben auch UV-Absorber, wie z.B. substituierte Hydroxyphenylbenzotriazole, Hydroxybenzophenone, Hydroxyphenyl-s-triazine, und Antioxantidantien, wie z.B. substituierte 2,6-Di-tert-butylphenole, verwendet werden.

Obgleich die erfindungsgemäß formulierte Polyurethan-Dispersion in ein- und zweikomponentiger Form zum Einsatz kommen kann, ist die einkomponentige Form wegen der besseren Handhabbarkeit als bevorzugt anzusehen. Im Falle einer zweikomponentigen Applikation werden die erfindungsgemäß formulierten Polyurethan-Dispersionen als Bindemittel-Komponente (Komponente A) und wasseremulgierbare Polyisocyanate, Polyaziridine oder sonstige zur Nachvernetzung geeignete Substanzen als Härter-Komponente (Komponente B) eingesetzt. Das Mischungsverhältnis von Kompente A zu Komponente B muss dabei an die jeweiligen Anforderungen angepasst werden.

Darüber hinaus ist es prinzipiell auch möglich, dass innerhalb der Formulierungen Polyurethan-Dispersionen mit wässrigen Polymer-Dispersionen, redispergierbaren Polymer-Pulvern und/oder nichtwässrigen Polymeren kombiniert werden. Außerdem können innerhalb der rissüberbrückenden Beschichtungssysteme die Formulierungen auf Basis von Polyurethan-Dispersionen mit Formulierungen auf Basis von wässrigen Polymer-Dispersionen, redispergierbaren Polymer-Pulvern, wässrigen Reaktivharzen, nichtwässrigen Polymeren und/oder nichtwässrigen Reaktivharzen kombiniert werden. Bei den wässrigen Polymer-Dispersionen handelt es sich vorzugsweise um lösemittelfreie Polyurethan-Polymer-Hybrid-Dispersionen mit einem Festkörper-Gehalt von 40 bis 60 Gew.-%, die in der deutschen Patentanmeldung DE 199 49 971 beschrieben werden, sowie um Emulsionspolymerisate auf Basis von (Meth)acrylsäure und Derivaten und/oder Styrol und Derivaten und/oder weiterer ethylenisch ungesättigter Monomeren. Als nichtwässrige Reaktivharze werden vorzugsweise lösemittelfreie oder lösemittelhaltige zweikomponentige Epoxid-Harze sowie lösemittelfreie oder lösemittelhaltige ein- oder zweikomponentige Polyurethane eingesetzt, die auf aliphatischen oder aromatischen Polyurethan-Prepolymeren basieren und die in Gegenwart von Luftfeuchtigkeit oder aliphatischen oder aromatischen Aminen aushärten. Als Grundierungen werden insbesondere zweikomponentige lösemittelfreie oder lösemittelhaltige Epoxid-Harze eingesetzt, die auf Bisphenol-A-diglycidether, Bisphenol-F-diglycidether sowie deren Derivaten basieren und die in Gegenwart von aliphatischen oder aromatischen Aminen aushärten, sowie ein- oder zweikomponentige Polyurethane oder dispersionsbasierende Produkte. Daneben können auch noch weitere aliphatische oder aromatische Polyepoxide als Vernetzer oder Reaktivverdünner eingesetzt werden. Beim Systemaufbau von rissüberbrückenden Beschichtungssystemen besteht zwischen den erfindungsgemäßen Formulierungen und den Formulierungen auf Basis lösemittelfreier oder lösemittelhaltiger ein- oder zweikomponentiger Polyurethane unter Beachtung der Überarbeitungszeiten vollständige Kompatibilität bei beliebiger Anordnung.

Als Flammschutzmittel werden vorzugsweise Metallhydroxide, Metallcarbonathydrate, Metalloxidhydrate, mehratomige komplexe Salze auf Basis von Aluminium, Antimon Bor und Zink oder Isocyanurate, Melaminharze, Polyhdroxy-Verbindungen sowie anorganische oder organische Phosphate eingesetzt.

Neben dieser verbesserten Verarbeitbarkeit sowie der sehr guten Umweltverträglichkeit ermöglichen die erfindungsgemäß vorgeschlagenen Polyurethan-Dispersionen noch folgende vorteilhafte Produkteigenschaften im Hinblick auf die entsprechenden Formulierungen und die entsprechenden rissüberbrückenden Beschichtungssysteme:

### Parkdeck- und Parkhausbeläge

### Brücken- und Brückenkappenabdichtungen

Vorteile gegenüber dem Stand der Technik:
- physiologisch unbedenklich
   - isocyanatfrei (Ausnahme: 2K-Versiegelung schwach isocyanathaltig)
   - lösemittelfrei (Ausnahme: 2K-Versiegelung lösemittelarm)
   - aminfrei
- Verwendung von 1K-Produkten (Ausnahme: 2K-Versiegelung)
- Keine Abstreuung der Epoxidharz-Grundierung erforderlich
- Gute Aushärtung bei tiefen Temperaturen (< 10 °C); isocyanathaltige Formulierungen härten in der Regel bei tiefen Temperaturen nur langsam aus und erreichen durch Nebenreaktionen nur ein vermindertes Eigenschaftsniveau
- Vollständige Kompatibilität der erfindungsgemäßen Formulierungen zu konventionellen Formulierungen auf Basis von ein- und zweikomponentigen Polyurethanen

### Balkonbeschichtungen

Vorteile gegenüber dem Stand der Technik:
- physiologisch unbedenklich
   - isocyanatfrei (Ausnahme: 2K-Versiegelung schwach isocyanathaltig)
   - lösemittelarm (geringe Mengen NMP und Proglyde DMM)
   - keine über einen langen Zeitraum freigesetzte, stark riechende Abspaltungsprodukte aus latenten Härtern (z.B. Isobutyraldehyd)
- Verwendung von 1K-Produkten (Ausnahme: 2K-Versiegelung)
- Keine Abstreung der Epoxidharz-Grundierung erforderlich
- Gute Aushärtung bei tiefen Temperaturen (< 10 °C);
- isocyanathaltige Formulierungen härten in der Regel bei tiefen Temperaturen nur langsam aus und erreichen durch Nebenreaktionen nur ein vermindertes Eigenschaftsniveau
- Sehr schnelle Aushärtung und Überarbeitbarkeit der aufgebrachten wässrigen Formulierungen; System kann in kurzer Zeit eingebaut werden

### (Ggf. flammgeschützte) Abdichtungen von Flachdächern mit zementösen, metallischen, bituminösen oder polymeren Untergründen

Vorteile gegenüber dem Stand der Technik:
- physiologisch unbedenklich
   - isocyanatfrei
   - lösemittelarm (geringe Mengen NMP)
   - keine über einen langen Zeitraum freigesetzte, stark riechende Abspaltungsprodukte aus latenten Härtern (z.B. Isobutyraldehyd)
- Verwendung von 1K-Produkten
- Gute Aushärtung bei tiefen Temperaturen (< 10 °C); Isocyanathaltige Formulierungen härten in der Regel bei tiefen Temperaturen nur langsam aus und erreichen durch Nebenreaktionen nur ein vermindertes Eigenschaftsniveau
- Farbstabilität

### (Ggf. flammgeschützte) UV-Schutzanstriche auf abgewittertem und neuem Dachschaum

Vorteile gegenüber dem Stand der Technik:
a) gegenüber 1K-PUR-Produkten:
   - physiologisch unbedenklich
      - isocyanatfrei
      - lösemittelarm (geringe Mengen NMP)
      - keine über einen langen Zeitraum freigesetzte, stark riechende Abspaltungsprodukte aus latenten Härtern (z.B. Isobutyraldehyd)
b) gegenüber 1K-Acrylat-Produkten:
   - bessere mechanische Eigenschaften
   - sehr geringe Wasseraufnahme

PUR-dispersionsbasierende Produkte vereinigen also die Vorteile der beiden gegenwärtig eingesetzten Produkttypen.

### Bauwerksabdichtungen unter Begrünungen

Vorteile gegenüber dem Stand der Technik:
- physiologisch unbedenklich
   - isocyanatfrei
   - lösemittelfrei
   - sowohl maschinen- als auch handverarbeitbar
   - insbesondere keine Verspritzung von monomerem Polyisocyanat (Überschreitung des MAK-Wertes möglich!)
- Verwendung von 1K-Produkten (keine Mischfehler)
- Verspritzung mit geringerem Aufwand als bei Reaktivbeschichtung, da keine Zweikomponentenspritzmaschine erforderlich ist.
- Keine Grundierung und kein Absanden erforderlich
- 2K-Versiegelung (schwach isocyanathaltig und lösemittelarm) nur als Bedarfsposition

### Allgemein:

- Die mechanischen Eigenschaften (Zugfestigkeit, Dehnung bei der Zugfestigkeit, Reissdehnung) der Formulierungen sind wider Erwarten mindestens gleich, im allgemeinen sogar deutlich besser als bei konventionellen isocyanathaltigen Systemen
- Alle Formulierungen zeigen eine sehr gute UV- und Farbstabilität, so dass ggf. auf eine Versiegelung verzichtet werden kann. Marktübliche, konventionelle isocyanathaltige Systeme zeigen eine deutlich geringere UV- und Witterungsbeständigkeit
- Die Hydrolysestabilität der Formulierungen ist auch ohne Nachvernetzung unerwartet hoch
- Uneingeschränkte Haftung innerhalb der einzelnen Schichten der oben genannten rissüberbrückenden Beschichtungssysteme ist gegeben
- Verglichen mit konventionellen isocyanathaltigen Systemen ist eine höhere Farbbrillianz bei geringerer Neigung zur Kreidung zu verzeichnen
- Formulierungen für rissüberbrückende Beschichtungssysteme wurden im Außenbereich verarbeitet. Haltbarkeit, Lagenhaftung, UV-Beständigkeit, Wasserbeständigkeit, Witterungsbeständigkeit etc. konnten in der Realität beurteilt werden. Die im Labor erhaltenen Ergebnisse konnten bestätigt werden

Die nachfolgenden Beispiele sollen die Erfindung näher veranschaulichen.

### Beispiele A.1 bis A.4: Polyurethan-Dispersionen

### Beispiel A.1

### Lösemittelfreie Polyurethan-Dispersion

### (Basis: Polypropylenglykol der Molekularmasse 2000 Dalton)

In einem Vierhalskolben ausgerüstet mit KPG-Rührer, Rückflusskühler, Thermometer und Stickstoffdeckung wird ein Gemisch aus 703,1 g Polypropylenglykol mit einer Hydroxylzahl von 56,1 mg KOH·g⁻¹ (Handelsname Arco Acclaim® 2200 der Fa. Arco Chemical) und 249,5 g Isophorondiisocyanat (Handelsname Desmodur I der Fa. Bayer) unter Stickstoff-Deckung 2 h bei 80 - 90 °C in Gegenwart von 0,2 g Dibutylzinndilaureat (DBTL) als Katalysator gerührt. Nach Zugabe von 28,1 g feingemahlener Dimethylolpropionsäure (Handelsname DMPA® der Fa. Mallinckrodt) zu dem Polyurethan-Preaddukt wird die Mischung unter Stickstoff-Deckung bei 80 - 90 °C weiter gerührt, bis der berechnete NCO-Gehalt erreicht wird (Theorie: 4,81 Gew.-% NCO). Der Verlauf der Reaktion wird acidimetrisch verfolgt. Nach dem Abkühlen auf 60 °C wird das Polyurethan-Prepolymer mit 19,1 g Triethylamin neutralisiert. 1000,0 g des Polyurethan-Prepolymers werden dann unter intensivem Rühren in 1000,0 g Wasser dispergiert und anschliessend mit 54,0 g wässriger Ethylendiamin-Lösung (50 Gew.-%) kettenverlängert.
Es wird eine stabile Polyurethan-Dispersion mit folgender Charakteristik erhalten:

| Aussehen | milchig-weisse Flüssigkeit |
|---|---|
| Festkörper-Gehalt | 50 Gew.-% |
| Zugfestigkeit | 23,6 MPa |
| Dehnung b. d. Zugfestigkeit | 705 % |
| Reissdehnung | 705% |
| Härte nach König | 25 s |

### Beispiel A.2

### Lösemittelfreie Polyurethan-Dispersion

### (Basis: Polypropylenglykol der Molekularmasse 2000 Dalton)

In einem Vierhalskolben ausgerüstet mit KPG-Rührer, Rückflusskühler, Thermometer und Stickstoffdeckung wird ein Gemisch aus 703,1 g Polypropylenglykol mit einer Hydroxylzahl von 56,1 mg KOH·g⁻¹ (Handelsname Arco Acclaim® 2200 der Fa. Arco Chemical) und 249,5 g Isophorondiisocyanat (Handelsname Desmodur I der Fa. Bayer) unter Stickstoff-Deckung 2 h bei 80 - 90 °C in Gegenwart von 0,2 g Dibutylzinndilaureat (DBTL) als Katalysator gerührt. Nach Zugabe von 28,1 g feingemahlener Dimethylolpropionsäure (Handelsname DMPA® der Fa. Mallinckrodt) zu dem Polyurethan-Preaddukt wird die Mischung unter Stickstoff-Deckung bei 80 - 90 °C weiter gerührt, bis der berechnete NCO-Gehalt erreicht wird (Theorie: 4,81 Gew.-% NCO). Der Verlauf der Reaktion wird acidimetrisch verfolgt. Nach dem Abkühlen auf 60 °C wird das Polyurethan-Prepolmer mit 19,1 g Triethylamin neutralisiert. 1000,0 g des Polyurethan-Prepolymers werden dann unter intensivem Rühren in 813,2 g Wasser dispergiert und anschliessend mit 54,0 g wässriger Ethylendiamin-Lösung (50 Gew.-%) kettenverlängert.
Es wird eine stabile Polyurethan-Dispersion mit folgender Charakteristik erhalten:

| Aussehen | milchig-weisse Flüssigkeit |
|---|---|
| Festkörper-Gehalt | 55,0 Gew.-% |
| Zugfestigkeit | 23,6 MPa |
| Dehnung b. d. Zugfestigkeit | 705 % |
| Reissdehnung | 705% |
| Härte nach König | 25 s |

### Beispiel A.3

### Lösemittelarme und lichtechte Polyurethan-Dispersion

### (Basis: Polycarbonat-Polyol der Molekularmasse 2000 Dalton)

In einem Vierhalskolben ausgerüstet mit KPG-Rührer, Rückflusskühler, Thermometer und Stickstoffdeckung wird ein Gemisch aus 604,2 g Polycarbonat-Polyol mit einer Hydroxylzahl von 56,1 mg KOH·g⁻¹ (Handelsname Desmodur® C 200 der Fa. Bayer), 247,0 g Isophorondiisocyanat (Handelsname Desmodur I der Fa. Bayer) und 91,5 g N-Methylpyrrolidon unter Stickstoff-Deckung 2 h bei 80 - 90 °C in Gegenwart von 0,2 g Dibutylzinndilaureat (DBTL) als Katalysator gerührt. Nach Zugabe von 34,0 g feingemahlener Dimethylolpropionsäure (Handelsname DMPA® der Fa. Mallinckrodt) zu dem Polyurethan-Preaddukt wird die Mischung unter Stickstoff-Deckung bei 80 - 90 °C weiter gerührt, bis der berechnete NCO-Gehalt erreicht wird (Theorie: 4,78 Gew.-% NCO). Der Verlauf der Reaktion wird acidimetrisch verfolgt. Nach dem Abkühlen auf 60 °C wird das Polyurethan-Prepolmer mit 23,1 g Triethylamin neutralisiert.
1000,0 g des Polyurethan-Prepolymers werden ohne Rühren mit 817,0 g Wasser überschichtet, anschliessend unter intensivem Rühren innerhalb weniger Minuten vollständig dispergiert und dann mit 50,8 g g wässriger Ethylendiamin-Lösung (50 Gew.-%) kettenverlängert.
Es wird eine stabile Polyurethan-Dispersion mit folgender Charakteristik erhalten:

| Aussehen | milchig-weisse Flüssigkeit |
|---|---|
| Festkörper-Gehalt | 50,0 Gew.-% |
| Lösemittel-Gehalt | 4,9 Gew,.% |
| Zugfestigkeit | 28,5 MPa |
| Dehnung b. d. Zugfestigkeit | 300 % |
| Reissdehnung | 300% |
| Härte nach König | 50 s |

### Beispiel A.4

### Lösemittelarme und lichtechte Polyurethan-Dispersion

### (Basis: Polycarbonat-Polyol der Molekularmasse 2000 Dalton)

In einem Vierhalskolben ausgerüstet mit KPG-Rührer, Rückflusskühler, Thermometer und Stickstoffdeckung werden 327,2 g einer Vormischung, bestehend aus 497,0 g Polycarbonat-Polyol mit einer Hydroxylzahl von 56,1 mg KOH·g⁻¹ (Handelsname Desmodur® C 200 der Fa. Bayer), 22,4 g 1,4-Butandiol, 40,0 g feingemahlener Dimethylolpropionsäure (Handelsname DMPA® der Fa. Mallinckrodt) und 95,0 g N-Methylpyrrolidon, und 318,2 g Isophorondiisocyanat (Handelsname Desmodur I der Fa. Bayer) unter Stickstoff-Deckung 2 h bei 80 - 90 °C in Gegenwart von 0,2 g Dibutylzinndilaureat (DBTL) als Katalysator gerührt. Nach Zugabe der restlichen 327,2 g der Vormischung zu dem Polyurethan-Preaddukt wird die Mischung unter Stickstoff-Deckung bei 80 - 90 °C weiter gerührt, bis der berechnete NCO-Gehalt erreicht wird (Theorie: 5,50 Gew.-% NCO). Der Verlauf der Reaktion wird acidimetrisch verfolgt. Nach dem Abkühlen auf 60 C wird das Polyurethan-Prepolmer mit 27,2 g Triethylamin neutralisiert.
1000,0 g des Polyurethan-Prepolymers werden ohne Rühren mit 1017,9 g Wasser überschichtet, anschließend unter intensivem Rühren innerhalb weniger Minuten vollständig dispergiert und dann mit 61,2 g wässriger Ethylendiamin-Lösung (50 Gew.-%) kettenverlängert.
Es wird eine stabile Polyurethan-Dispersion mit folgender Charakteristik erhalten:

| Aussehen | milchig-weisse Flüssigkeit |
|---|---|
| Festkörper-Gehalt | 45,0 Gew.-% |
| Lösemittel-Gehalt | 4,6 Gew,.% |
| Zugfestigkeit | 25 MPa |
| Dehnung b. d. Zugfestigkeit | 260 % |
| Reissdehnung | 260% |
| Härte nach König | 65 s |

### Beispiele B.1 bis B.6: Formulierungen

### Die Angaben beziehen sich jeweils auf Gewichtsteile

### PUD = Polyurethan-Dispersion

### Beispiel B.1

### Selbstverlaufende Grundschicht / Deckschicht / Schwimmschicht

| | | |
|---|---|---|
| (1) | 648,0 | PUD gemäss Beispiel A.1 |
| (2) | 2,0 | Byk-024 (Gemisch schaumzerstörender Polysiloxane) |
| (3) | 2,0 | Byk-022 (Gemisch schaumzerstörender Polysiloxane) |
| (4) | 3,0 | Disperbyk-190 (Block-Copolymer mit pigmentaffinen Gruppen) |
| (5) | 20,0 | Heucosin RAL 7032 (Pigment) |
| (6) | 3,0 | Tego Wet 265 (Substratnetzadditiv) |
| (7) | 311,0 | Millicarb (Füllstoff, natürliches Calciumcarbonat) |
| (8) | 5,0 | Aerosil 200 (pyrogene Kieselsäure) |
| (9) | 1,0 | Tafigel PUR 60 (Polyurethan-Verdicker) |
| (10) | 3,0 | Irganox 1135 (Antioxidanz) |
| (11) | 2,0 | Edaplan LA 413 (Silikon-Verlaufsadditiv) |
| Σ:1000,0 | | |

| | |
|---|---|
| Zugfestigkeit | 10,3 MPa |
| Bruchdehnung | 560 % |

### Beispiel B.2

### Flammgeschützte Spritzbeschichtung

| | | |
|---|---|---|
| (1) | 485,9 | PUD gemäss Beispiel A.2 |
| (2) | 2,0 | Byk-024 (Gemisch schaumzerstörender Polysiloxane) |
| (3) | 2,0 | Pigmentverteiler NL (Ammoniumsalz eines Polyacrylates) |
| (4) | 5,0 | Bayferrox 130 (Pigment) |
| (5) | 110,5 | Omyacarb 10 BG (Füllstoff, natürliches Calciumcarbonat) |
| (6) | 380,0 | Apyral 16 (flammhemmender Füllstoff, Aluminiumhydroxid) |
| (7) | 0,6 | Tafigel PUR 45 (Polyurethan-Verdicker) |
| (8) | 1,0 | Tafigel PUR 60 (Polyurethan-Verdicker) |
| (9) | 10,0 | Metatin 55-45 (Biozid) |
| (10) | 3,0 | Irganox 1135 (Antioxidans) |
| Σ:1000,0 | | |

| | |
|---|---|
| Zugfestigkeit | 5,8 MPa |
| Bruchdehnung | 350 % |
| Wasseraufnahme | ca. 5 Gew.-% |

### Beispiel B.3

### Flammgeschützte, lichtechte und pigmentierte Grundschicht / Deckschicht / Versiegelung

| | | |
|---|---|---|
| (1) | 393,2 | PUD gemäss Beispiel A.3 (lichtecht) |
| (2) | 75,0 | Acronal S 321 (Styrol/Acrylat-Copolymer-Dispersion) |
| (3) | 5,0 | Byk-028 (Gemisch schaumzerstörender Polysiloxane) |
| (4) | 3,0 | Disperbyk-190 (Block-Copolymer mit pigmentaffinen Gruppen) |
| (5) | 3,0 | Tego Wet 500 (schauminhibierendes Netzadditiv) |
| (6) | 55,0 | Disflamoll DPK (Phosphatweichmacher mit Flammschutz) |
| (7) | 75,0 | Bayferrox 130 (Pigment) |
| (8) | 340,0 | Securoc A 32 (flammhemmender Füllstoff, Aluminiumhydroxid) |
| (9) | 2,0 | Edaplan LA 413 (Silikon-Verlaufsadditiv) |
| (10) | 15,0 | Metatin 55-45 (Biozid) |
| (11) | 30,0 | Wasser |
| (12) | 0,5 | Tafigel PUR 45 (Polyurethan-Verdicker) |
| (13) | 0,3 | Tafigel PUR 60 (Polyurethan-Verdicker) |
| (14) | 3,0 | Tinuvin 292 (Lichtschutzmittel, HALS-Typ) |
| Σ:1000,0 | | |

| | |
|---|---|
| Zugfestigkeit | 2,8 MPa |
| Bruchdehnung | 277 % |
| Wasseraufnahme (1 d) | 6,3 Gew.-% |
| Wasseraufnahme (5 d) | 2,3 Gew.-% |

### Beispiel B.4

### Einkomponentige, pigmentierte und lichtechte Deckschicht

| | | |
|---|---|---|
| (1) | 784,0 | PUD gemäss Beispiel A.4 (lichtecht) |
| (2) | 8,0 | Byk-024 (Gemisch schaumzerstörender Polysiloxane) |
| (3) | 5,0 | Disperbyk-191 (Block-Copolymer mit pigmentaffinen Gruppen) |
| (4) | 5,0 | Tego Wet 500 (schauminhibierendes Netzadditiv) |
| (5) | 70,0 | Heucosin RAL 7032 (Pigment) |
| (6) | 120,0 | Silitin Z 89 (Kieselerde, Gemisch aus Quarz und Kaolinit) |
| (7) | 2,0 | Aerosil 200 (pyrogene Kieselsäure) |
| (8) | 3,0 | Edaplan LA 413 (Silikon-Verlaufsadditiv) |
| (9) | 3,0 | Tinuvin 292 (Lichtschutzmittel, HALS-Typ) |
| Σ:1000,0 | | |

| | |
|---|---|
| Dichte | 1,2 kg dm⁻³ |
| Festkörper-Gehalt | ca. 55 Gew.-% |
| Viskosität | ca. 500 mPa s |
| Zugfestigkeit | 25 MPa |
| Bruchdehnung | 280 % |

### Beispiel B.5

### Zweikomponentige, farblose und lichtechte Versiegelung

| Komponente A (Bindemittel) | | |
|---|---|---|
| (1) | 988,0 | PUD gemäss Beispiel A.4 (lichtecht) |
| (2) | 3,0 | Byk-024 (Gemisch schaumzerstörender Polysiloxane) |
| (3) | 3,0 | Tego Wet 500 (schauminhibierendes Netzadditiv) |
| (4) | 3,0 | Edaplan LA 413 (Silikon-Verlaufsadditiv) |
| (5) | 3,0 | Tinuvin 292 (Lichtschutzmittel, HALS-Typ) |
| Σ:1000,0 | | |

| Komponente B (Härter) | | |
|---|---|---|
| (1) | 900,0 | Basonat PLR 8878 (wasserdispergierbares Polyisocyanat) |
| (2) | 100,0 | Proglyde DMM (Dipropylenglykoldimethylether, Lösemittel) |
| Σ:1000,0 | | |

Mischungsverhältnis: A : B = 1000 : 180 Gewichtsteile

| | |
|---|---|
| Dichte (23 °C) | 1,2 kg dm⁻³ |
| Festkörper-Gehalt | ca. 50 Gew.-% |
| Viskosität (4 mm DIN-Becher) | 45 s |
| Begehbarkeit (23 °C) | 2 h |
| chemisch belastbar (23 °C) | 7 d |

### Beispiel B.6

### Zweikomponentige, pigmentierte und lichtechte Versiegelung

| Komponente A (Bindemittel) | | |
|---|---|---|
| (1) | 700,0 | PUD gemäss Beispiel A.4 (lichtecht) |
| (2) | 3,0 | Byk-011 (Gemisch schaumzerstörender Polysiloxane) |
| (3) | 3,0 | Disperbyk-190 (Block-Copolymer mit pigmentaffinen Gruppen) |
| (4) | 170,0 | Heucosin RAL 7032 kieselgrau (Pigment) |
| (5) | 76,0 | Silitin Z 89 (Kieselerde, Gemisch aus Quarz und Kaolinit) |
| (6) | 10,0 | Aerosil 200 (pyrogene Kieselsäure) |
| (7) | 2,0 | Byk-022 (Gemisch schaumzerstörender Polysiloxane) |
| (8) | 4,0 | Byk-333 (Verlaufsadditiv, Siliconbasis) |
| (9) | 2,0 | Tafigel PUR 45 (Polyurethan-Verdicker) |
| (10) | 30,0 | Wasser |
| Σ:1000,0 | | |

| Komponente B (Härter) | | |
|---|---|---|
| (1) | 900,0 | Rhodocoat WT 2102 (wasserdispergierbares Polyisocyanat) |
| (2) | 100,0 | Proglyde DMM (Dipropylenglykoldimethylether, Lösemittel) |
| Σ:1000,0 | | |

Mischungsverhältnis: A : B = 1000 : 150 Gewichtsteile

### Beispiele C.1 bis C.14: Rissüberbrückende

### Beschichtungssysteme

EP = Epoxidharz
PUD = Polyurethan-Dispersion
PUR = konventionelles Polyurethanharz

### Beispiel C.1

### Systemaufbau I in Anlehnung an OS 11 für Parkdeck- und Parkhausbeläge

### Systemaufbau für Brücken und Brückenkappen

| | | |
|---|---|---|
| Grundierung | Conipox 77 Z Transparent EP, zweikomponentig, lösemittelfrei | Verbrauch ca. 1,0 kg m⁻² |
| | | |
| | 1 : 0,8 gefüllt mit feuergetrocknetem Quarzsand der Körnung 0,05 - 0,20 mm | |
| | | |
| 1. Schwimmschicht | Formulierung gemäss Beispiel B.1 pigmentiert PUD, einkomponentig, lösemittelfrei | Verbrauch ca. 1,0 kg·m⁻² |
| | | |
| 2. Schwimmschicht | Formulierung gemäss Beispiel B.1 pigmentiert PUD, einkomponentig, lösemittelfrei | Verbrauch ca. 1,0 kg·m⁻² |
| | | |
| Deckschicht | Formulierung gemäss Beispiel B.1 pigmentiert PUD, einkomponentig, lösemittelfrei | Verbrauch ca. 2,5 kg·m⁻² |
| | | |
| | 1 : 0,9 gefüllt mit feuergetrocknetem Quarzsand der Körnung 0,05 - 0,20 mm | |
| | | |
| | überschüssige Absandung feuergetrockneter Quarzsand der Körnung 0,3 - 0,8 mm | Verbrauch ca. 2,5 kg·m⁻² |
| | | |
| Versiegelung | Formulierung gemäss Beispiel B.6 pigmentiert PUD, zweikomponentig, lösemittelarm | Verbrauch ca. 0,60 kg·m⁻² |

### Beispiel C.2

### Systemaufbau II in Anlehnung an OS 13 für Parkdeck- und Parkhausbeläge

### Systemaufbau für Brücken und Brückenkappen

| | | |
|---|---|---|
| Grundierung | Conipox 77 Z transparent EP, zweikomponentig, lösemittelfrei | Verbrauch ca. 1,0 kg·m⁻² |
| | | |
| | 1 : 0,8 gefüllt mit feuergetrocknetem Quarzsand der Körnung 0,05 - 0,20 mm | |
| | | |
| | Formulierung gemäss Beispiel B.1 pigmentiert PUD, einkomponentig, lösemittelfrei | Verbrauch ca. 2,5 kg·m⁻² |
| | | |
| 1. Deckschicht | 1 : 0,9 gefüllt mit feuergetrocknetem Quarzsand der Körnung 0,05 - 0,20 mm | |
| | | |
| 2. Deckschicht | Formulierung gemäss Beispiel B.1 pigmentiert PUD, einkomponentig, lösemittelfrei | Verbrauch ca. 2,5 kg·m⁻² |
| | | |
| | 1 : 0,9 gefüllt mit feuergetrocknetem Quarzsand der Körnung 0,05 - 0,20 mm | |
| | | |
| | überschüssige Absandung feuergetrockneter Quarzsand der Körnung 0,3 - 0,8 mm | Verbrauch ca. 2,5 kg·m⁻² |
| | | |
| Versiegelung | Formulierung gemäss Beispiel B.6 pigmentiert PUD, zweikomponentig, lösemittelarm | Verbrauch ca. 0,60 kg·m⁻² |

### Beispiel C.3

### Systemaufbau III in Anlehnung an OS 13 für Parkdeck- und Parkhausbeläge

### Systemaufbau für Brücken und Brückenkappen

| | | |
|---|---|---|
| Grundierung | Conipox 77 Z transparent EP, zweikomponentig, lösemittelfrei | Verbrauch ca. 0,4 kg·m⁻² |
| | | |
| Deckschicht | Formulierung gemäss Beispiel B.1 pigmentiert PUD, einkomponentig, lösemittelfrei | Verbrauch ca. 2,5 kg·m⁻² |
| | | |
| | 1 : 0,9 gefüllt mit feuergetrocknetem Quarzsand der Körnung 0,05 - 0,20 mm | |
| | | |
| | überschüssige Absandung feuergetrockneter Quarzsand der Körnung 0,3 - 0,8 mm | Verbrauch ca. 2,5 kg·m⁻² |
| | | |
| Versiegelung | Formulierung gemäss Beispiel B.6 pigmentiert PUD, zweikomponentig, lösemittelarm | Verbrauch ca. 0,60 kg·m⁻² |

### Beispiel C.4

### Systemaufbau IV in Anlehnung an ZTV-SIB OS-F für Parkdeck- und Parkhausbeläge

### Systemaufbau für Brücken und Brückenkappen

| | | |
|---|---|---|
| Grundierung | Conipox 77 Z transparent EP, zweikomponentig, lösemittelfrei | Verbrauch ca. 1,0 kg⁻² |
| | | |
| | 1 : 0,8 gefüllt mit feuergetrocknetem Quarzsand der Körnung 0,05 - 0,20 mm | |
| | | |
| Spritzbeschichtung | Formulierung gemäss Beispiel B.2 pigmentiert PUD, einkomponentig, lösemittelfrei | Verbrauch ca. 2,5 kg·m⁻² |
| | | |
| Deckschicht | Formulierung gemäss Beispiel B.1 pigmentiert | Verbrauch ca. 2,5 kg·m⁻² |
| | PUD, einkomponentig, lösemittelfrei | |
| | 1 : 0,9 gefüllt mit feuergetrocknetem Quarzsand der Körnung 0,05 - 0,20 mm | |
| | | |
| | überschüssige Absandung feuergetrockneter Quarzsand der Körnung 0,3 - 0,8 mm | Verbrauch ca. 2,5 kg·m⁻² |
| | | |
| Versiegelung | Formulierung gemäss Beispiel B.6 pigmentiert PUD, zweikomponentig, lösemittelarm | Verbrauch ca. 0,60 kg·m⁻² |

### Beispiel C.5

### Gemischte Systemaufbauten aus erfindungsgemäßen Formulierungen und konventionellen Formulierungen als Alternativen:

| a) | Alternative zu Beispiel C.1 (Versiegelung entfällt) | | |
|---|---|---|---|
| 1.+ | | | |
| 2. | Schwimmschicht | CONIPUR 268 F (Fa. Conica Technik AG) pigmentiert PUR, zweikomponentig, lösemittelfrei | Verbrauch ca. 2,1 - 2,5 kg·m⁻² |
| | | | |
| | | oder | |
| | | | |
| Deckschicht | | CONIPUR 258 (Fa. Conica Technik AG) pigmentiert | Verbrauch ca. 0,5 - 0,8 kg·m⁻² |
| | | PUR, einkomponentig, lösemittelarm abriebfest, zähelastisch, matt, chemikalienbeständig, UV-beständig | |

| b) | Alternative zu Beispiel C.2 (Versiegelung entfällt) | | |
|---|---|---|---|
| 2. | Deckschicht | CONIPUR 258 (Fa. Conica Technik AG) pigmentiert PUR, einkomponentig, lösemittelarm abriebfest, zähelastisch, matt, chemikalienbeständig, UV-beständig | Verbrauch ca. 0,5 - 0,8 kg·m⁻² |

| c) | Alternative zu Beispiel C.3 (Versiegelung entfällt) | | |
|---|---|---|---|
| Deckschicht | | CONIPUR 258 (Fa. Conica Technik AG) pigmentiert PUR, einkomponentig, lösemittelarm abriebfest, zähelastisch, matt, chemikalienbeständig, UV-beständig | Verbrauch ca. 0,5 - 0,8 kg·m⁻² |

### Beispiel C.6

### Systemaufbau für Balkonbeschichtung

| | | |
|---|---|---|
| Grundierung | Conipox 602 transparent EP, zweikomponentig, lösemittelfrei | Verbrauch ca. 1,0 kg·m⁻² |
| | 1 : 0,8 gefüllt mit feuergetrocknetem Quarzsand der Körnung 0,05 - 0,20 mm | |
| | | |
| 1 Deckschicht | Formulierung gemäss Beispiel B.4 Pigmentiert PUD, einkomponentig, lösemittelfrei | Verbrauch ca. 0,3 - 0,4 kg·m⁻² |
| | | |
| 2. Deckschicht | Formulierung gemäss Beispiel B.4 pigmentiert PUD, einkomponentig, lösemittelfrei | Verbrauch ca. 0,3 - 0,4 kg·m⁻² |
| | | |
| | Abstreuung mit Farbchips (Bedarfsposition) | Verbrauch ca. 15 - 20 g·m⁻² |
| | | |
| | Formulierung gemäss Beispiel B.6 pigmentiert PUD, zweikomponentig, lösemittelarm | Verbrauch ca. 0,15 kg·m⁻² |
| | | |
| | oder | |
| | | |
| Versiegelung | Formulierung gemäss Beispiel B.5 farblos (bei Abstreuung mit Farbchips) PUD, zweikomponentig, lösemittelarm | |

### Beispiel C.7

### Systemaufbau für flammgeschützte Abdichtung von Flachdächern mit unterschiedlichen Untergründen (zementöse, metallische, bituminöse Untergründe sowie Hartschäume und PVC)

| | | |
|---|---|---|
| Spritzbeschichtung | Formulierung gemäss Beispiel B.2 pigmentiert PUD, einkomponentig, lösemittelfrei | Verbrauch ca. 2,5 kg·m⁻² |
| | | |
| Versiegelung | Formulierung gemäss Beispiel B.3 Pigmentiert PUD, einkomponentig, lösemittelarm UV-beständig | Verbrauch ca. 0,15 kg·m⁻² |

Applikation der Formulierung gemäss Beispiel B.3 durch Rollen, Streichen oder Spritzen.

### Beispiel C.8

### Systemaufbau für flammgeschützten UV-Schutzanstrich auf abgewittertem Dachschaum

| | | |
|---|---|---|
| Grundbeschichtung | Formulierung gemäss Beispiel B.3 pigmentiert PUD, einkomponentig, lösemittelarm | Verbrauch ca. 0,5 - 1,0 kg·m⁻² |
| | | |
| Deckschicht | Formulierung gemäss Beispiel B.3 pigmentiert PUD, einkomponentig, lösemittelarm | Verbrauch ca. 0,3 - 0,6 kg·m⁻² |

Applikation der Formulierung gemäss Beispiel B.3 durch Rollen, Streichen oder Spritzen.

### Beispiel C.9

### Systemaufbau für flammgeschützten UV-Schutzanstrich auf neuem Dachschaum

| | | |
|---|---|---|
| Grundschicht | Formulierung gemäss Beispiel B.3 pigmentiert PUD, einkomponentig, lösemittelarm | Verbrauch ca. 0,30 kg·m⁻² |
| | | |
| Deckschicht | Formulierung gemäss Beispiel B.3 pigmentiert PUD, einkomponentig, lösemittelarm | Verbrauch ca. 0,30 kg·m⁻² |

Applikation der Formulierung gemäss Beispiel B.3 durch Rollen, Streichen oder Spritzen.

### Beispiel C.10

### Systemaufbau für flammgeschützten UV-Schutzanstrich auf neuem Dachschaum

### (abgestreute Variante gegen Vogelpick)

| | | |
|---|---|---|
| Deckschicht | Formulierung gemäss Beispiel B.3 pigmentiert PUD, einkomponentig, lösemittelarm | Verbrauch ca. 0,80 kg·m⁻² |
| | | |
| | Abstreuung mit BA Color Schiefer der Körnung 2 - 3 mm Fa. Basermann Minerals GmbH | Verbrauch ca. 2,0 kg·m⁻² |

Applikation der Formulierung gemäss Beispiel B.3 durch Rollen, Streichen oder Spritzen.

### Beispiel C.11

### Systemaufbau für flammgeschützten UV-Schutzanstrich auf neuem Dachschaum

### (abgestreute Variante gegen Vogelpick mit erhöhter Rissüberbrückung)

| | | |
|---|---|---|
| Grundschicht | Formulierung gemäss Beispiel B.3 pigmentiert PUD, einkomponentig, lösemittelarm | Verbrauch ca. 0,30 kg·m⁻² |
| | | |
| Deckschicht | Formulierung gemäss Beispiel B.3 pigmentiert PUD, einkomponentig, lösemittelarm | Verbrauch ca.. 0,60 kg·m⁻² |
| | | |
| | Abstreuung mit BA Color Schiefer der Körnung 2 - 3 mm Fa. Basermann Minerals GmbH | Verbrauch ca. 2,0 kg·m⁻² |

Applikation der Formulierung gemäss Beispiel B.3 durch Rollen, Streichen oder Spritzen.

### Beispiel C.12 (Referenzbeispiel)

### Systemaufbau für Bodenbeläge für Büroräume, Krankenhäuser etc. (Dünnbelag)

| | | |
|---|---|---|
| Grundierung | Conipox 602 transparent EP, zweikomponentig, | Verbrauch ca. 1,0 kg·m⁻² |
| | lösemittelfrei | |
| | | |
| | 1 : 0,8 gefüllt mit feuergetrocknetem Quarzsand der Körnung 0,05 - 0,20 mm | |
| | | |
| 1. Deckschicht | Formulierung gemäss Beispiel B.4 pigmentiert PUD, einkomponentig, lösemittelarm | Verbrauch ca. 0,3 - 0,4 kg·m⁻² |
| | | |
| 2. Deckschicht | Formulierung gemäss Beispiel B.4 pigmentiert PUD, einkomponentig, lösemittelarm | Verbrauch ca. 0,3 - 0,4 kg·m⁻² |
| | | |
| | Abstreuung mit Farbchips (Bedarfsposition) | Verbrauch ca. 15 - 20 g·m⁻² |
| | | |
| Versiegelung | Formulierung gemäss Beispiel B.6 pigmentiert PUD, zweikomponentig, lösemittelarm | Verbrauch ca. 0,15 kg·m⁻² |
| | | |
| | oder | |
| | | |
| | Formulierung gemäss Beispiel B.5 farblos (bei Abstreuung mit Farbchips) PUD, zweikomponentig, lösemittelarm | |

### Beispiel C.13 (Referenzbeispiel)

### Systemaufbau für Bodenbeläge für Büroräume, Krankenhäuser etc. (Dickbelag)

| | | |
|---|---|---|
| Grundierung | Conipox 602 transparent EP, zweikomponentig, lösemittelfrei | Verbrauch ca. 1,0 kg·m⁻² |
| | | |
| | 1 : 0,8 gefüllt mit feuergetrocknetem Quarzsand der Körnung 0,05 - 0,20 mm | |
| | | |
| Grundschicht | Formulierung gemäss Beispiel B .1 transparent PUD, einkomponentig, lösemittelfrei | Verbrauch ca. 2,0 kg·m⁻² |
| | | |
| | 1 : 0, 9 gefüllt mit feuergetrocknetem Quarzsand der Körnung 0,05 - 0,20 mm | |
| | | |
| Deckschicht | Formulierung gemäss Beispiel B.4 pigmentiert PUD, einkomponentig, lösemittelarm (Bedarfsposition) | Verbrauch ca. 0, 3 - 0,4 kg·m⁻² |
| | | |
| | Abstreuung mit Farbchips (Bedarfsposition) | Verbrauch ca. 15 - 20 g·m⁻² |
| | | |
| Versiegelung | Formulierung gemäss Beispiel B.6 pigmentiert PUD, zweikomponentig, | Verbrauch ca. 0,15 kg·m⁻² |
| | lösemittelarm | |
| | | |
| | oder | |
| | | |
| | Formulierung gemäss Beispiel B.5 farblos (bei Abstreuung mit Farbchips) PUD, zweikomponentig, lösemittelarm | |

### Beispiel C.14

### Systemaufbau für Abdichtungen unter Begrünungen sowie im Tage- und Untertagebau

| | | |
|---|---|---|
| Spritzbeschichtung | Formulierung gemäss Beispiel B.2 pigmentiert PUD, einkomponentig, lösemittelfrei | Verbrauch ca. 2 - 5 kg·m⁻² |
| | | |
| Versiegelung | Formulierung gemäss Beispiel B. 3 pigmentiert PUD, einkomponentig, lösemittelfrei UV-beständig (Bedarfsposition) | Verbrauch ca. 0,3 kg·m⁻² |

Applikation der Formulierung gemäss Beispiel B.3 durch Rollen, Streichen oder Spritzen.

## Patentansprüche

1. Verwendung von wässrigen, isocyanatfreien Polyurethan-Dispersionen mit einem Festkörper-Gehalt von ≥ 30 Gew.-% und einem Lösemittel-Gehalt von ≤ 10 Gew.-% in Formulierungen für rissüberbrückende Beschichtungssysteme, ausgewählt aus:
• Grund-, Schwimm-, Deckschichten, Spritzbeschichtungen und/oder Versiegelungen auf vorzugsweise grundierten Bauwerksoberflächen;
• Dach-Beschichtungen oder -Anstrichen; sowie
• Abdichtungen von Bauwerken im Tage- oder Untertagebau,
wobei die Formulierungen einzeln oder in Kombination zum Systemaufbau von
a) Parkdeck- und/oder Parkhausbelägen,
b) Brücken- und/oder Brückenkappenabdichtungen,
c) Balkonbeschichtungen,
d) Abdichtungen von Flachdächern mit zementösen, metallischen, bituminösen oder polymeren Untergründen,
e) UV-Schutzanstrichen auf abgewittertem oder neuem Dachschaum, oder
f) Bauwerksabdichtungen unter Begrünungen
eingesetzt werden,
wobei die rissüberbrückenden Beschichtungssysteme in ein- oder zweikomponentiger Form zum Einsatz kommen
und wobei bei zweikomponentiger Applikation die Formulierungen auf Basis der Polyurethan-Dispersionen als Bindemittel und zur Nachvernetzung geeignete Substanzen als Härter-Komponente eingesetzt werden.

2. Verwendung nach Anspruch 1, **dadurch gekennzeichnet, dass** die Polyurethan-Dispersionen als Bindemittel für
a) selbstverlaufende Grund-, Schwimm- und/oder Deckschichten,
b) Spritzbeschichtungen,
c) lichtechte und/oder pigmentierte Grund- oder Deckschichten, oder Versiegelungen,
d) einkomponentige, pigmentierte oder lichtechte Deckschichten,
e) zwedcomponentige, farblose oder lichtechte Versiegelungen, oder
f) zweikomponentige, pigmentierte oder lichtechte Versiegelungen
eingesetzt werden.

3. Verwendung nach Anspruch 1 oder 2, **dadurch gekennzeichnet, dass** die Polyurethan-Dispersionen einen Festkörper-Gehalt von 40 bis 60 Gew.-% aufweisen.

4. Verwendung nach den Ansprüchen 1 bis 3 **dadurch gekennzeichnet, dass** die Formulierungen in Schichten mit einer Gesamtdicke von 0,05 bis 50 mm auf die zu beschichtenden Flächen aufgebracht werden.

5. Verwendung nach den Ansprüchen 1 bis 4, **dadurch gekennzeichnet, dass** die Formulierungen in einer Menge von 0,1 bis 10,0 kg·m⁻² der zu beschichtenden Fläche und pro Arbeitsgang eingesetzt werden.

6. Verwendung nach den Ansprüchen 1 bis 5, **dadurch gekennzeichnet, dass** die Formulierungen 25 bis 99 Gew.-% an wässrigen Polyurethan-Dispersionen enthalten.

7. Verwendung nach den Ansprüchen 1 bis 6, **dadurch gekennzeichnet, dass** die Formulierungen 15 bis 50 Gew.-% an Polyurethan-Polymeren enthalten.

8. Verwendung nach den Ansprüchen 1 bis 7, **dadurch gekennzeichnet, dass** die Formulierungen 0,1 bis 5,0 Gew.-%, bezogen auf die Gesamtmasse der Formulierung, eines UV-Stabilisators auf Basis eines sterisch gehinderten Amins enthalten.

9. Verwendung nach den Ansprüchen 1 bis 8, **dadurch gekennzeichnet, dass** bei zweikomponentiger Applikation die zur Nachvernetzung geeigneten Substanzen wasseremulgierbare Polyisocyanate oder Polyaziridine sind.

10. Verwendung nach den Ansprüchen 1 bis 9, **dadurch gekennzeichnet, dass** innerhalb der Formulierungen Polyurethan-Dispersionen mit wässrigen Polymer-Dispersionen, redispergierbaren Polymer-Pulvern und/oder nichtwässrigen Polymeren kombiniert werden.

11. Verwendung nach den Ansprüchen 1 bis 10, **dadurch gekennzeichnet, dass** die Formulierungen auf Basis der Polyurethan-Dispersionen mit Formulierungen auf Basis von wässrigen Polymer-Dispersionen, redispergierbaren Polymer-Pulvern, wässrigen Reaktivharzen, nichtwässrigen Polymeren und/oder nichtwässrigen Reaktivharzen kombiniert werden.

12. Verwendung nach den Ansprüchen 10 und 11, **dadurch gekennzeichnet, dass** als wässrige Polymer-Dispersionen lösemittelfreie Polyurethan-Polymer-Hybrid-Dispersionen mit einem Festkärper-Gehalt von 40 bis 60 Gew.-% eingesetzt werden.

13. Verwendung nach Anspruch 11, **dadurch gekennzeichnet, dass** als nichtwässrige Reaktivharze lösemittelfreie oder lösemittelhaltige ein- oder zweikomponentige Polyurethane eingesetzt werden.

14. Verwendung nach Anspruch 13, **dadurch gekennzeichnet, dass** die ein- oder zweikomponentigen Polyurethane auf aliphatischen oder aromatischen Polyurethan-Prepolymeren basieren und in Gegenwart von Luftfeuchtigkeit oder aliphatischen oder aromatischen Aminen aushärten.

15. Verwendung nach den Ansprüchen 10 und 11, **dadurch gekennzeichnet, dass** als wässrige Polymer-Dispersionen Emulsionspolymerisate auf Basis von (Meth)acrylsäure und Derivaten und/oder Styrol und Derivaten und/oder weiterer ethylenisch ungesättigter Monomeren eingesetzt werden.

16. Verwendung nach den Ansprüchen 1 bis 15, **dadurch gekennzeichnet, dass** als Grundierungen lösemittelfreie oder lösemittelhaltige zweikomponentige Epoxid-Harze, ein- oder zweikomponentige Polyurethane oder dispersionsbasierende Produkte eingesetzt werden.

17. Verwendung nach Anspruch 16, **dadurch gekennzeichnet, dass** als zweikomponentige Epoxid-Harze Bisphenol-A-diglycidether, Bisphenol-F-diglycidether sowie deren Derivate, die in Gegenwart von aliphatischen oder aromatischen Aminen aushärten, eingesetzt werden.

## Claims

1. Use of aqueous, isocyanate-free polyurethane dispersions having a solids content of ≥ 30 wt.% and a solvent content of ≤ 10 wt.% in formulations for crack-bridging coating systems, selected from:
• primers, floating layers, cover layers, spray coatings and/or sealings on preferably primed building surfaces;
• roof coatings or roof paints; and
• joints of buildings in overground or underground construction,
wherein the formulations are used individually or in combination for the system structure of
a) coverings for top floors of parking areas and/or multi-storey car parks,
b) bridge and/or bridge crown joints,
c) balcony coatings,
d) joints of flat roofs with cementitious, metallic, bituminous or polymer foundations,
e) UV protective paints on weathered or new roof foam, or
f) building joints under turfing,
wherein the crack-bridging coating systems are used in one-component or two-component form and wherein in the case of two-component application, the formulations based on polyurethane dispersions are used as binder and substances suitable for post-crosslinking are used as hardener component.

2. Use according to claim 1, **characterised in that** the polyurethane dispersions are used as binders for
a) self-levelling primers, floating layers and/or cover layers,
b) spray coatings,
c) light-fast and/or pigmented primers or cover layers, or sealings,
d) one-component, pigmented or light-fast cover layers,
e) two-component, colourless or light-fast sealings, or
f) two-component, pigmented or light-fast sealings.

3. Use according to claim 1 or 2, **characterised in that** the polyurethane dispersions have a solids content of 40 to 60 wt.%.

4. Use according to claims 1 to 3, **characterised in that** the formulations are applied to the surfaces to be coated in layers having a total thickness of 0.05 to 50 mm.

5. Use according to claims 1 to 4, **characterised in that** the formulations are used in a quantity of 0.1 to 10.0 kg·m⁻² of the surface to be coated and per working step.

6. Use according to claims 1 to 5, **characterised in that** the formulations contain 25 to 99 wt.% of aqueous polyurethane dispersions.

7. Use according to claims 1 to 6, **characterised in that** the formulations contain 15 to 50 wt.% of polyurethane polymers.

8. Use according to claims 1 to 7, **characterised in that** the formulations contain 0.1 to 5.0 wt.%, based on the total mass of the formulation, of a UV stabiliser based on a sterically hindered amine.

9. Use according to claims 1 to 8, **characterised in that** in the case of two-component application, the substances suitable for post-crosslinking are water-emulsifiable polyisocyanates or polyaziridines.

10. Use according to claims 1 to 9, **characterised in that** within the formulations, polyurethane dispersions are combined with aqueous polymer dispersions, redispersible polymer powders and/or non-aqueous polymers.

11. Use according to claims 1 to 10, **characterised in that** the formulations based on polyurethane dispersions are combined with formulations based on aqueous polymer dispersions, redispersible polymer powders, aqueous reactive resins, non-aqueous polymers and/or non-aqueous reactive resins.

12. Use according to claims 10 and 11, **characterised in that** solvent-free polyurethane-polymer hybrid dispersions having a solids content of 40 to 60 wt.% are used as aqueous polymer dispersions.

13. Use according to claim 11, **characterised in that** solvent-free or solvent-containing one-component or two-component polyurethanes are used as non-aqueous reactive resins.

14. Use according to claim 13, **characterised in that** the one-component or two-component polyurethanes are based on aliphatic or aromatic polyurethane prepolymers and harden in the presence of air moisture or aliphatic or aromatic amines.

15. Use according to claims 10 and 11, **characterised in that** emulsion polymers based on (meth)acrylic acid and derivatives and/or styrene and derivatives and/or further ethylenically unsaturated monomers are used as aqueous polymer dispersions.

16. Use according to claims 1 to 15, **characterised in that** solvent-free or solvent-containing two-component epoxy resins, one-component or two-component polyurethanes or dispersion-based products are used as primers.

17. Use according to claim 16, **characterised in that** bisphenol-A diglycide ethers, bisphenol-F diglycide ethers and derivatives thereof, which harden in the presence of aliphatic or aromatic amines, are used as two-component epoxy resins.

## Revendications

1. Utilisation de dispersions aqueuses, exemptes d'isocyanate, de polyuréthane, ayant une teneur en solides ≥ 30% en poids et une teneur en solvant ≤ 10% en poids, dans des formulations pour des systèmes de revêtement servant à colmater les fissures, sélectionnées parmi :
• des couches de base, flottantes, de couverture, des revêtements par projection et/ou des bouche-pores sur des surfaces d'ouvrage de construction, de préférence ayant reçu un apprêt ;
• des revêtements ou des enduits de toitures ; ainsi que
• des étanchements d'ouvrages de construction en construction de surface ou souterraine,
les formulations étant utilisées individuellement ou en combinaison pour construire un système formé
a) des revêtements de couverture de parc de stationnement et/ou de bâtiment de stationnement,
b) des étanchements pour pont et/ou des voussures de pont
c) des revêtements pour balcon,
d) des étanchements de toits plats avec des sous-couches en ciment, métalliques, bitumineuses, ou en polymère,
e) des enduits de protection contre les UV, sur une mousse de toiture, ayant subi les intempéries ou neuve, ou
f) des étanchements d'ouvrage situées sous des engazonnements,
les systèmes de revêtement servant à colmater les fissures étant utilisés sous forme à un ou à deux composants
et où, en cas d'application à deux composants, les formulations à base de dispersion de polyuréthane étant utilisées en tant que liant, et des substances, appropriées pour la post-réticulation, étant utilisées en tant que composants de durcisseur.

2. Utilisation selon la revendication 1, **caractérisée en ce que** les dispersions de polyuréthane sont utilisées en tant que liant pour
a) des couches de base, flottantes et/ou de couverture s'étendant d'elles-mêmes,
b) des revêtements par projection,
c) des couches de base ou de couverture résistant à la lumière et/ou pigmentées, ou des bouche-pores,
d) des couches de couverture à un composant, pigmentées ou résistant à la lumière,
e) des couches bouche-pores à deux composants, incolores ou résistant à la lumière, ou
f) des couches bouche-pores à deux composants, pigmentées ou résistant à la lumière.

3. Utilisation selon la revendication 1 ou 2, **caractérisée en ce que** les dispersions de polyuréthane présentent une teneur en solides de 40 à 60% en poids.

4. Utilisation selon les revendications 1 à 3, **caractérisée en ce que** les formulations sont appliquées en couches d'une épaisseur totale de 0,05 à 50 mm sur les surfaces à revêtir.

5. Utilisation selon les revendications 1 à 4, **caractérisée en ce que** les formulations sont utilisées en une quantité de 0, 1 à 10,0 kg·m⁻² de la surface à revêtir et par passe opératoire.

6. Utilisation selon les revendications 1 à 5, **caractérisée en ce que** les formulations contiennent de 25 à 99% en poids de dispersions aqueuses de polyuréthane.

7. Utilisation selon les revendications 1 à 6, **caractérisée en ce que** les formulations contiennent de 15 à 50% en poids de polymères de polyuréthane.

8. Utilisation selon les revendications 1 à 7, **caractérisée en ce que** les formulations contiennent de 0,1 à 5,0% en poids, en se référant à la masse totale de la formulation, d'un stabilisateur aux UV, à base d'amine stériquement bloqué.

9. Utilisation selon les revendications 1 à 8, **caractérisée en ce que**, lors de l'application à deux composants, les substances convenant pour la post-réticulation sont des polyisocyanates ou des polyaziridines émulsifiables dans l'eau.

10. Utilisation selon les revendications 1 à 9, **caractérisée en ce que**, à l'intérieur des formulations, des dispersions de polyuréthane sont combinées à des dispersions aqueuses de polymères, des poudres redispersibles de polymères et/ou des polymères non aqueux.

11. Utilisation selon les revendications 1 à 10, **caractérisée en ce que** les formulations à base des dispersions de polyuréthane sont combinées à des formulations à base de dispersions aqueuses de polymères, de poudres redispersibles de polymères, de résines réactives aqueuses, de polymères non aqueux et/ou de résines réactives non aqueuses.

12. Utilisation selon les revendications 10 et 11, **caractérisée en ce que** sont utilisées, en tant que dispersions aqueuses de polymères, des dispersions hybrides polyuréthane-polymère exemptes de solvant, avec une teneur en solides de 40 à 60% en poids.

13. Utilisation selon la revendication 11, **caractérisée en ce que**, en tant que résine réactive non aqueuse, sont utilisés des polyuréthanes à un ou deux composants, sans solvant, ou contenant des solvants.

14. Utilisation selon la revendication 13, **caractérisée en ce que** les polyuréthanes à un ou à deux composants sont basés sur des pré-polymères de polyuréthane, aliphatiques ou aromatiques, et durcissent en présence de l'humidité de l'air ou d'amines aliphatiques ou aromatiques.

15. Utilisation selon les revendications 10 et 11, **caractérisée en ce que** l'on utilise en tant que dispersions aqueuses de polymère des polymérisats d'émulsion à base d'acide (méth)acrylique et de dérivés, et/ou de styrène et de dérivés, et/ou d'autres monomères éthyléniquement insaturés.

16. Utilisation selon les revendications 1 à 15, **caractérisée en ce qu'**on utilise comme couches d'apprêt des résines époxydes à deux composants, sans solvant ou contenant des solvants, des polyuréthanes à un ou deux composants ou des produits à base de dispersion.

17. Utilisation selon la revendication 16, **caractérisée en ce qu'**on utilise en tant que résines époxydes à deux composants du bisphénol-A-diglycidéther, bisphénol-F-diglycidéther ainsi que leurs dérivés, durcissant en présence d'amines aliphatiques ou aromatiques.
